# EUROPÄISCHE PATENTSCHRIFT

(11) **EP 2 668 062 B1**
(45) Veröffentlichungstag und Bekanntmachung des Hinweises auf die Patenterteilung: **11.11.2020**
(21) Anmeldenummer: 12703020.3
(22) Anmeldetag: 27.01.2012
(51) Int. Cl.: B60L 3/00, H01R 13/62, B60L 53/16, B60L 53/65, H01R 13/633, H01R 13/639

(54) **VERRIEGELUNGSVORRICHTUNG, INSBESONDERE FÜR EINEN STECKER**
LOCKING DEVICE, IN PARTICULAR FOR A PLUG
DISPOSITIF DE VERROUILLAGE, NOTAMMENT POUR UN CONNECTEUR

(30) Priorität: 27.01.2011 DE 102011000380; 03.05.2011 DE 102011050071; 31.05.2011 DE 102011050783
(43) Veröffentlichungstag der Anmeldung: 04.12.2013
(73) Patentinhaber: Huf Hülsbeck & Fürst GmbH & Co. KG, 42551 Velbert (DE)
(72) Erfinder: GORENZWEIG, Igor, Alexander, 42279 Wuppertal (DE); MÖNIG, Stefan, 58332 Schwelm (DE)
(74) Vertreter: Bals, Rüdiger
(86) Internationale Anmeldenummer: PCT/EP2012/051388
(87) Internationale Veröffentlichungsnummer: WO 2012/101274

(56) Entgegenhaltungen:
- EP-A1- 2 138 444
- DE-A1-102009 030 092
- DE-A1-102009 044 179
- US-A1- 2010 013 433

## Beschreibung

Die vorliegende Erfindung ist auf eine Verriegelungsvorrichtung zur Ver- und Entriegelung eines beweglichen Teils, insbesondere eines Ladekabelsteckers oder einer Tankklappe, für ein Fahrzeug gemäß dem Oberbegriff von Anspruch 1 gerichtet. Derartige Verriegelungsvorrichtungen weisen zumindest ein bewegliches Sperrmittel, insbesondere in Form eines Sperrbolzens auf, das zur mechanischen Verriegelung des beweglichen Teils dient, wobei das Sperrmittel zumindest eine Verriegelungsstellung, in welcher das bewegliche Teil durch das Sperrmittel verriegelbar ist, und eine Entriegelungsstellung, in welcher das bewegliche Teil durch das Sperrmittel freigebbar ist, vorhanden ist. Des Weiteren ist ein elektromechanischer Antrieb vorgesehen, der das Sperrmittel antreibt, wodurch ein Wechsel zwischen der Verriegelungsstellung und der Entriegelungsstellung erzeugbar ist. Zumindest das erwähnte Sperrmittel und der Antrieb sind in einem Gehäuse für die Verriegelungsvorrichtung angeordnet.

Derartige Verriegelungsvorrichtungen mit einem Ladekabelstecker als bewegliches Teil werden im Bereich von Fahrzeugen, insbesondere für Elektrofahrzeuge eingesetzt, um beim Aufladen der Fahrzeuge eine sichere und geschützte Verbindung zwischen der Energiequelle und dem Fahrzeug herzustellen, indem das Ladekabel mit dem Ladekabelstecker am Fahrzeug gesichert ist. Hierzu ist am Fahrzeug eine entsprechende Ladebuchse vorgesehen, in die das üblicherweise mit dem Fahrzeug mitgeführte Ladekabel eingesteckt werden kann, um dann das Fahrzeug an einer Tankstelle, Zapfsäule oder einer Garage oder dergleichen mit der externen Energiequelle verbinden zu können. Dabei möchte man verhindern, dass einerseits das Ladekabel gestohlen wird oder aber der Ladevorgang von Dritten unterbrochen wird, die dann die Energie aus dem Ladekabel zweckentfremden und gegebenenfalls ein fremdes Fahrzeug aufladen. Zu diesem Zweck sind derartige Verriegelungsvorrichtungen zwischen dem Ladekabelstecker und der entsprechenden Ladebuchse am Fahrzeug vorgesehen, die insbesondere über die Fahrzeugelektronik angesteuert werden. Hierbei kann man sich insbesondere das Sicherheitssystem des Fahrzeugs, wie der elektrischen Zentralverriegelung oder der Wegfahrsperre, zu nutzen machen.

Aus der Druckschrift DE 10 2009 030 092 A1 ist ein Ladekabelstecker für Elektrofahrzeuge bekannt, der über eine derartige Verriegelungsvorrichtung mit entsprechenden Verriegelungsmitteln mechanisch verriegelt wird. Dabei fahren automatisch zwei Verriegelungsmittel in die dafür vorgesehenen Öffnungen im Ladekabelstecker ein, wenn dieser mit der Ladebuchse des Fahrzeugs verbunden ist. Auf diese Art und Weise ist der Ladekabelstecker am Fahrzeug gegen unbefugtes Entfernen mechanisch gesichert.

Nachteilig an diesem Stand der Technik ist jedoch, dass bei einem Notfall, wenn z. B. die Fahrzeugelektronik oder das erwähnte Sicherheitssystem des Fahrzeuges ausfällt, der Ladekabelstecker nicht mehr vom Fahrzeug entfernt werden kann. Somit ist eine Weiterfahrt oder ein Abschleppen des Fahrzeuges kaum möglich.

Aufgabe der vorliegenden Erfindung ist es, eine Verriegelungsvorrichtung zu schaffen, die ein Lösen des Ladekabelsteckers in einem Notfall ermöglicht. Dabei soll selbstverständlich im Notfall nur ein berechtigter Bediener die Verriegelungsvorrichtung bedienen dürfen.

Die Aufgabe der vorliegenden Erfindung wird durch eine Verriegelungsvorrichtung gemäß dem Anspruch 1, insbesondere aus den Merkmalen des kennzeichnenden Teils gelöst. Weitere vorteilhafte Ausgestaltungen der Erfindung sind in den Unteransprüchen sowie in der nachfolgenden Beschreibung und den Figuren dargestellt.

Erfindungsgemäß ist es bei der Verriegelungsvorrichtung mit den Merkmalen aus dem Oberbegriff von Anspruch 1 vorgesehen, dass eine Notentriegelung für einen Notfall vorgesehen ist, wobei die Notentriegelung das Sperrmittel aus seiner Verriegelungsstellung in seine Entriegelungsstellung überführt. Es sei an dieser Stelle erwähnt, dass auch zwei oder mehrere Sperrmittel vorhanden sein können. Im Sinne dieser Erfindung wird unter dem beweglichen Teil insbesondere ein Ladekabelstecker, eine Tankklappe, Motorhaube oder dergleichen verstanden.

Die zuvor erwähnte Notentriegelung kann insbesondere nur durch einen berechtigten Bediener betätigbar sein. Dieses kann z. B. dadurch erreicht werden, dass die Notentriegelung ins Fahrzeuginnere geführt wird und von dort aus durch den berechtigten Bediener betätigbar ist oder dass die Notentriegelung mit einem gesicherten Betätigungselement zusammenwirkt, welches über eine Schließvorrichtung, insbesondere einen mechanischen Schließzylinder mit einem entsprechenden Schlüssel bedienbar ist, um somit eine Notentriegelung einleiten zu können.

Des Weiteren kann es vorgesehen sein, dass das Sperrmittel zumindest zweiteilig aufgebaut ist, wobei es ein Führungsteil und ein Sperrteil aufweisen kann. Das Führungsteil dient dazu, dass der Antrieb das Sperrmittel bewegen kann. Das Sperrteil hingegen dient zur mechanischen Verriegelung des Ladekabelsteckers. Im Normalfall bewegen sich das Führungsteil und das Sperrteil gleichzeitig, so dass keine Relativbewegung zwischen den beiden Teilen stattfindet. Allerdings ist das Sperrteil durch eine Führung relativ zum Führungsteil beweglich, wobei insbesondere das Sperrteil eine Aufnahmeführung aufweist, in der das Führungsteil eintauchen kann. Zusätzlich kann ein Federelement zwischen dem Führungsteil und dem Sperrteil angeordnet sein, welches die beiden Teile auseinanderdrückt. Vorteilhafterweise ist dieses Federelement in der Aufnahmeführung im Sperrteil angeordnet. Damit sich das Federelement nicht in der Aufnahmeführung verhaken kann, können Vorsprünge am Sperrteil und/oder Führungsteil vorgesehen sein, die formschlüssig mit dem Federelement zusammenwirken. Des Weiteren kann die Verbindung zwischen dem Führungsteil und dem Sperrteil durch zumindest ein Verbindungsteil hergestellt werden, welches insbesondere die Form eines Verbindungsstiftes aufweist. Selbstverständlich sind auch Varianten zu dem erwähnten Führungsteil und Sperrteil denkbar, so dass z. B. das Sperrteil in eine Ausnahmeführung im Führungsteil eintaucht, so dass eine kinematische Umkehr vorliegt. Damit eine Relativbewegung zwischen dem Führungsteil und dem Sperrteil möglich ist, kann ein Langloch vorgesehen sein, so dass sich das Verbindungsteil innerhalb dieses Langloches bewegen kann. Hierbei ist es denkbar, dass das Verbindungsteil fest im Führungsteil angeordnet ist und das Langloch im Sperrteil vorgesehen ist, um mit dem Verbindungsteil formschlüssig aber mit einem Spiel zusammenwirken zu können. Bei einer kinematischen Umkehr kann die gewünschte Relativbewegung dadurch erreicht werden, dass das Verbindungsteil fest mit dem Sperrteil verbunden ist und mit einem Langloch im Führungsteil formschlüssig zusammenwirkt.

Das zuvor erwähnte Sperrmittel kann sowohl aus einem längsverschieblichen Sperrbolzen, einem kipp- oder drehbaren Sperrhebel, einer Sperrmutter oder einem Sperrring oder dergleichen bestehen, die mechanisch mit dem beweglichen Teil, insbesondere durch einen Formschluss, in der Verriegelungsstellung zusammenwirken. Bei dem erwähnten Formschluss kann eine Ausnehmung im beweglichen Teil vorgesehen sein, in die das Sperrmittel in der Verriegelungsstellung einfährt. Bei der erwähnten Sperrmutter kann der Formschluss zwischen dem Sperrmittel und dem beweglichen Teil z. B. durch einen Bajonett-Verschluss hergestellt werden. Um eine besonders sichere mechanische Verbindung zwischen dem Sperrmittel und dem beweglichen Teil zu erzeugen, ist diese derart anzuordnen, dass die Verbindung von außen nicht zugänglich ist, um somit Manipulationen von außen zu verhindern. Aus diesem Grund empfiehlt es sich, die erfindungsgemäße Verriegelungsvorrichtung im Fahrzeuginneren anzuordnen, wo sie für unberechtigte Dritte nicht zugänglich ist. Hierbei kann die Verriegelungsvorrichtung teilweise von einer fahrzeugseitigen Ladebuchse umgeben sein, die zur Aufnahme des externen Ladekabelsteckers als bewegliches Teil dient. Dabei kann die Verriegelungsvorrichtung, insbesondere durch ihr Gehäuse, mit der fahrzeugseitigen Ladebuchse für den externen Ladekabelstecker mechanisch verbunden sein. Ebenfalls ist es denkbar, dass das Gehäuse mit der Verriegelungsvorrichtung gleichzeitig auch die Ladebuchse aufweist, in die der externe Ladekabelstecker eingeführt wird und dort in der Verriegelungsstellung verrastet. Somit ist es äußerst schwierig zwischen die Verriegelungsvorrichtung und dem beweglichen Teil, insbesondere den Ladekabelstecker, zu gelangen, um das Sperrmittel zu manipulieren.

Ferner kann es bei der erfindungsgemäßen Verriegelungsvorrichtung vorgesehen sein, dass an dem Sperrmittel ein Steuermittel, insbesondere eine Steuerkurve oder Steuerkontur, vorgesehen ist, welches zur Ansteuerung eines ersten Signalgebers dient. Dieser Signalgeber ist vorzugsweise innerhalb des Gehäuses der Verriegelungsvorrichtung angeordnet und kann dazu dienen, messtechnisch zu erfassen, ob eine ordnungsgemäße Verriegelung des beweglichen Teils, insbesondere des Ladekabelsteckers, stattgefunden hat. Das entsprechende Verriegelungssignal kann dann an die Fahrzeugelektronik weitergegeben werden, um z. B. die eigentliche Energiezufuhr über das Ladekabel zu steuern. Folglich kann der erste Signalgeber dazu dienen, die Energiezufuhr erst dann freizuschalten, wenn eine ordnungsgemäße Verriegelung des Ladekabels, insbesondere des Ladekabelsteckers, stattgefunden hat. Das entsprechende Steuermittel kann einteilig und/oder materialeinheitlich zum Sperrmittel, insbesondere dem Sperrteil, angeordnet sein. Durch die Anordnung des Steuermittels an dem Sperrteil können somit mögliche Fehlsignale weitestgehend vermieden werden, da das Sperrmittel im direkten Kontakt mit dem beweglichen Teil, insbesondere dem Ladekabelstecker, steht.

Ferner ist es denkbar, dass die Notentriegelung ein Zugmittel aufweist, wodurch zumindest ein Teil des Sperrmittels im Notfall bewegbar ist, um somit das Sperrmittel von der Verriegelungsstellung in die Entriegelungsstellung zu überführen. Hierbei kann das Zugmittel mit dem Sperrteil vom Sperrmittel zusammenwirken und gegen die Kraft des Federelements zum Führungsteil bewegbar sein. Somit wirkt das Zugmittel in diesem Fall direkt auf das Sperrteil, wodurch eine Relativbewegung zwischen dem Sperrteil und dem Führungsteil erzeugbar ist, um die mechanische Verbindung zwischen dem beweglichen Teil, insbesondere dem Ladekabelstecker, und dem Sperrmittel aufheben zu können.

Des Weiteren kann es vorgesehen sein, dass das Zugmittel ein Kompensationselement aufweist, um eine Bewegung des Sperrmittels zwischen der Ver- und Entriegelungsstellung kompensieren zu können. Ebenfalls können gegebenenfalls äußere mechanische Einflüsse, insbesondere durch Wärmeausdehnung, mechanische Erschütterungen oder dergleichen, durch das Kompensationselement kompensiert werden. Durch das Kompensationselement wird somit sicher vermieden, dass es zu einer ungewollten Notentriegelung der erfindungsgemäßen Verriegelungsvorrichtung kommt. Ferner ist es von Vorteil, wenn das Kompensationselement des Zugmittels innerhalb des Gehäuses der Verriegelungsvorrichtung angeordnet ist. Hierbei ist es besonders bevorzugt innerhalb des Sperrmittels, bzw. im Bereich des Sperrmittels, angeordnet, um Störungen zu vermeiden. Sofern das Kompensationselement innerhalb des Sperrmittels angeordnet ist, hat es sich als vorteilhaft herausgestellt, wenn es im Führungsteil vorgesehen ist.

Des Weiteren ist es denkbar, dass das Zugmittel mit einem ersten Ende an dem Sperrteil vom Sperrmittel angreift. Auch kann das Zugmittel durch das Innere des Sperrmittels, insbesondere durch das Innere vom Führungsteil und/oder des Sperrteils, durchgeführt sein. Hierbei hat es sich als vorteilhaft herausgestellt, wenn das Zugmittel insgesamt durch das Innere des Sperrmittels, also durch das Führungsteil und das Sperrteil durchgeführt ist. Auf diese Art und Weise kann einerseits der benötigte Bauraum möglichst klein gehalten werden und andererseits eine sichere Durchführung des Zugmittels innerhalb der Verriegelungsvorrichtung und dabei durch das Sperrmittel realisiert werden.

Auch ist es im Rahmen der Erfindung denkbar, dass das Zugmittel mit einem zweiten Ende in dem Fahrzeuginnenraum endet, wodurch es von einem berechtigten Benutzer im Notfall bedienbar ist. Denn nur der berechtigte Benutzer hat auch einen Zugang zum Fahrzeuginnenraum, den er auch durch entsprechende Sicherheitsmaßnahmen im Notfall erhält. Üblicherweise weisen Fahrzeuge hierzu mechanische Notschließsysteme auf, die dem berechtigten Benutzer einen Zugang zum Fahrzeug gewähren.

Ebenfalls ist es denkbar, dass das Zugmittel mit seinem zweiten Ende an einem Betätigungselement ankoppelbar ist, wobei das Betätigungselement durch eine mechanische Schließvorrichtung, insbesondere einen Schließzylinder betätigbar ist. Diese mechanische Schließvorrichtung kann mit dem Notsystem für den Zugang des Fahrzeugs gekoppelt sein oder aber von dem selben mechanischen Schlüssel über den erwähnten Schließzylinder durch den berechtigten Benutzer bedient werden. Zu diesem Zweck ist die Schließvorrichtung, insbesondere der Schließzylinder, von der Fahrzeugaußenseite für den Benutzer erreichbar. Im Rahmen dieser Erfindung soll das zuvor erwähnte Betätigungselement ebenfalls zu der erfindungsgemäßen Verriegelungsvorrichtung gehören, wobei dieses Betätigungselement in einem separaten Gehäuse angeordnet sein kann. Ebenfalls ist es denkbar, dass das Betätigungselement aber auch in einem gemeinsamen Gehäuse mit der Verriegelungsvorrichtung angeordnet ist.

Das bisher erwähnte Zugmittel kann flexibel oder starr ausgestaltet sein, wobei es sich bei einem flexiblen Zugmittel, um ein Seil, Drahtseil, einen Bowdenzug, Kette oder dergleichen handeln kann. Ebenfalls kann aber auch das Zugmittel starr ausgestaltet sein, wobei hierbei eine Stange und/oder ein Hebel vorhanden sein kann. Auch ist es denkbar, dass das Zugmittel teilweise flexibel und teilweise starr ist, so dass unterschiedliche Zugmittelelemente bei einem Zugmittel zum Einsatz kommen können. Um eine sichere Bedienung der erfindungsgemäßen Verriegelungsvorrichtung zu bewirken, kann das erste Ende des Zugmittels form-, kraft- und/oder stoffschlüssig mit dem Sperrteil verbunden sein. Sofern ein starres Zugmittel innerhalb der Verriegelungsvorrichtung zum Einsatz kommt, kann das Kompensationselement eine Feder (oder ein Seil) enthalten, die eine definierte Längenausdehnung zulässt und anschließend die Zugkraft vom zweiten Ende des Zugmittels auf das erste Ende des Zugmittels vollständig überträgt. Sofern im Inneren der Verriegelungsvorrichtung ein flexibles Zugmittel zum Einsatz kommt, kann das Kompensationselement durch eine Aufwicklung erzeugt werden, die ebenfalls eine definierte Längenausdehnung des Kompensationselements zulässt. Sofern die Aufwicklung komplett abgewickelt ist, wird auch die Zugkraft vom zweiten Ende des Zugmittels auf das erste Ende übertragen.

Optional kann es weiter vorgesehen sein, dass in dem Sperrteil eine Ausnehmung mit einem fortlaufenden Durchbruch zur Aufnahme des Zugmittels vorgesehen ist. Hierbei kann das erste Ende des Zugmittels in der Ausnehmung gehalten sein. Das Zugmittel selber kann an seinem ersten Ende mit einer Verdickung ausgestaltet sein, die mit der Ausnehmung insbesondere formschlüssig zusammenwirkt. Ferner ist es denkbar, dass das Zugmittel durch das Innere des Sperrmittels und des Federelements verläuft.

Des Weiteren ist es denkbar, dass die erfindungsgemäße Verriegelungsvorrichtung eine Montage des Zugmittels bei einem zusammengesetzten Sperrmittel ermöglicht. Somit ist eine besonders einfache Montage der gesamten Verriegelungsvorrichtung möglich. Ebenfalls kann zu diesem Zweck das Gehäuse der Verriegelungsvorrichtung zweiteilig aufgebaut sein und hierzu eine untere und eine obere Gehäusehälfte aufweisen, die beispielsweise nur über Rastverbindungen, insbesondere Clipsverbindungen, miteinander formschlüssig verbunden werden. Zusätzlich können die beiden Gehäusehälften auch verschraubt, verschweißt und/oder vernietet werden. Sofern nur Rastverbindungen zur Verbindung der beiden Gehäusehälften eingesetzt werden, ist die Montage der Verriegelungsvorrichtung besonders einfach und kostengünstig ausgestaltet.

Ebenfalls ist es denkbar, dass ein Freiraum am Sperrmittel, insbesondere am Sperrteil, für das Zugmittel, insbesondere das erste Ende vom Zugmittel, vorgesehen ist, wodurch im Normalfall eine Bewegung des Sperrmittels zwischen der Ver- und Entriegelungsstellung ohne eine Bewegung des Zugmittels durchführbar ist. Somit kann im Normalfall das Sperrmittel zwischen der Ver- und Entriegelungsstellung hin- und hergefahren werden, wobei sich der Freiraum um das erste Ende des Zugmittels hin- und herbewegt und das Zugmittel, insbesondere das erste Ende, keine Bewegung vollzieht, also bewegungslos ist. Vorzugsweise ist dieser Freiraum für das Zugmittel ebenfalls als Langloch ausgestaltet, in dem insbesondere das erste Ende vom Zugmittel formschlüssig, aber eben mit einem Spiel, mechanisch wirkend angeordnet ist. Soll nun im Notfall eine Entriegelung des Sperrmittels vollzogen werden, so reicht ein Zug am Zugmittel aus, bis das erste Ende formschlüssig an einem Anschlag des Freiraums im Sperrmittel anschlägt und dann das Sperrteil aus der Verriegelungsstellung II in die Entriegelungsstellung I bewegt. Somit dient der zuvor erwähnte Freiraum am Sperrmittel, insbesondere am Sperrteil, gleichzeitig als Kompensationselement für das Zugmittel. Selbstverständlich kann auch ein weiteres Kompensationsmittel nur im Zugmittel vorgesehen sein, um zuverlässig eine Notentriegelung im Normalfall zu vermeiden.

Ebenfalls kann der zuvor erwähnte Freiraum durch ein Spiel zwischen dem Sperrmittel und dem Zugmittel gebildet werden. Auch ist es denkbar, dass das erste Ende vom Zugmittel mit einer pfeilförmigen Spitze ausgestaltet ist, die formschlüssig mit dem Sperrmittel, insbesondere dem Sperrteil zusammenwirkt. Dabei kann das erste Ende des Zugmittels mit dem Sperrteil eine Rastverbindung insbesondere über die pfeilförmige Spitze eingehen. Damit die Spitze federnd ausgestaltet ist, kann zumindest ein Längsschnitt durch die Spitze in den Schaft vom ersten Ende des Zugmittels vorgesehen sein. Hierdurch lässt sich das erste Ende des Zugmittels leicht in den Durchbruch vom Sperrteil einführen, der aus einer kreisförmigen Bohrung bestehen kann. Diese Bohrung kann einen Absatz oder Vorsprung aufweisen, die mit einem rausragenden Rand der pfeilförmigen Spitze des ersten Zugmittels die formschlüssige Rastverbindung bilden kann. Damit sich das Sperrmittel im Normalfall zwischen seiner Verriegelungsstellung II und seiner Entriegelungsstellung I bewegen kann, kann der Freiraum am Sperrteil vorgesehen sein, der für die pfeilförmige Spitze des ersten Endes des Zugmittels geeignet ist. Hierbei kann der Durchbruch für das erste Ende des Zugmittels im Sperrteil nach unten hin offen ausgestaltet sein, so dass die Spitze des Zugmittels ausreichend Freiraum erhält, um nicht einer Bewegung im Normalfall vom Sperrmittel folgen zu müssen.

Im Rahmen der Erfindung kann es ebenfalls vorgesehen sein, dass das erste Ende des Zugmittels über eine Zugmittelhalterung am Gehäuse der Verriegelungsvorrichtung befestigbar ist. Hierbei wird die Spitze des ersten Endes vom Zugmittel über einen Form- und/oder Kraftschluss mit dem Sperrmittel, insbesondere dem Sperrteil, verbunden, wobei der erwähnte Freiraum bzw. das notwendige Spiel im Sperrmittel für das erste Ende des Zugmittels vorgesehen ist. Somit wird im Normalfall das erste Ende vom Zugmittel bzw. das gesamte Zugmittel nicht bei einer Betätigung des Sperrmittels mit bewegt. Durch den Zugmittelhalter kann auf einfache Art und Weise das flexible Zugmittel an das erste Ende des Zugmittels gekoppelt werden. Außerdem ist es möglich, die gesamte Verriegelungsvorrichtung mit dem vormontierten ersten Ende des Zugmittels an einen Kunden auszuliefern, der die Verriegelungsvorrichtung, beispielsweise im Fahrzeug, einbaut. Zur Fertigstellung der Montage der eingebauten Verriegelungsvorrichtung muss dann nur noch der Teil des Zugmittels, der flexibel ausgestaltet ist, mit dem ersten Ende des Zugmittels verbunden werden. Hierbei kann z. B. ein Bowdenzug mit einer Seele und einer Hülle zum Einsatz kommen, wobei die Seele fest mit dem ersten Ende des Zugmittels verbunden wird und die Hülle des Bowdenzugs sich am Zugmittelhalter abstützt, um somit die erforderliche Zugkraft auf die Seele übertragen zu können. Zu diesem Zweck weist der Zugmittelhalter eine Aufnahme, die insbesondere zylinderförmig ausgebildet sein kann, für die Hülle eines Bowdenzugs oder dergleichen auf. Ferner schließt sich an diese Aufnahme ein Durchbruch für die Seele des flexiblen Zugmittels an, die zum ersten Ende des Zugmittels führt.

Des Weiteren ist es erfindungsgemäß denkbar, dass an dem ersten Ende des Zugmittels auch direkt eine Dichtung angespritzt ist, die mit einem Durchbruch im Gehäuse der Verriegelungsvorrichtung abdichtend zusammenwirkt, somit kann auf eine zusätzliche Dichtung, die separat montiert werden muss und durch die das Zugmittel bei der Montage geführt werden muss, um in das Gehäuse zu gelangen, verzichtet werden. Vielmehr ist es möglich, bei der Montage das erste Ende des Zugmittels mit der angespritzten Dichtung durch den Durchbruch im Gehäuse durchzuführen und gleichzeitig damit die gewünschte Abdichtung zum Gehäuse hin zu erzielen. Somit entfällt auch noch der Fertigungsschritt, dass die Dichtung am Gehäuse vormontiert werden muss, um dann anschließend das erste Ende vom Zugmittel durchzuführen. Zweckmäßigerweise wird die Dichtung durch ein 2K-Spritzgussverfahren mit dem ersten Ende des Zugmittels verbunden. Das erste Ende des Zugmittels kann hierfür Kunststoff aufweisen und selbst als Spritzgussteil hergestellt werden. Die Dichtung selbst kann über Hohlräume verfügen, um den Anpressdruck zwischen Dichtung und Gehäuse nicht zu hoch werden zu lassen. Hierdurch kann erreicht werden, dass das erste Ende vom Zugmittel bewegbar zum Gehäuse beleibt, da die Dichtung sich in diesem Fall mit dem Zugmittel bei einer Betätigung im Notfall mit bewegt.

Ferner kann am ersten Ende des Zugmittels eine Öse oder Aufnahme für den flexiblen Teil des Zugmittels vorgesehen sein, um somit die Kraft vom flexiblen Teil des Zugmittels auf das erste Ende des Zugmittels übertragen zu können. Zweckmäßigerweise besteht eine derartige Aufnahme aus einer Öse oder einer Bohrung, durch die z. B. ein Bowdenzug als flexibles Durchzugsmittel eingeführt wird, wobei das Ende des Bowdenzugs mit einer Plombe versehen ist, die sich in der Öse oder der Aufnahme des ersten Endes vom Zugmittel insbesondere formschlüssig verhakt. Auch ist es denkbar, dass die erwähnte Plombe vom flexiblen Zugmittel direkt mit dem ersten Zugmittelende umspritzt wird, so dass das erste Ende des Zugmittels mit dem flexiblen Zugmittel eine Einheit darstellt. Diese Einheit ist somit ebenfalls vormontiert, wobei die Spitze des ersten Zugmittelendes nur in das Gehäuse und in das darin vorgesehene Sperrmittel eingeführt und verbunden werden muss, vorzugsweise über die erwähnte Rastverbindung, und anschließend der Zugmittelhalter die Bowdenzughülle in seiner Aufnahme aufnimmt, so dass die Montage der Verriegelungsvorrichtung mit dem vormontierten Zugmittel abgeschlossen ist. Ebenfalls ist es denkbar, dass der felexible Teil vom Zugmittel mit dem ersten Teil verschraubt wird. Idealerweise ist die Aufnahme am ersten Ende des Zugmittels für den Teil des flexiblen Zugmittels außerhalb des Gehäuses der Verriegelungsvorrichtung angeordnet. Hierbei kann die Aufnahme auch als Stutzen, insbesondere seitlicher Stutzen, am ersten Ende des Zugmittels vorgesehen sein, durch den der Teil des flexiblen Zugmittels geführt wird und daran befestigt ist. Durch die externe Anordnung der Aufnahme oder Öse vom ersten Ende des Zugmittels für den flexiblen Teil des Zugmittels wird sichergestellt, dass dieses einfach austauschbar ist, falls das flexible Zugmittel reißen sollte oder ausgetauscht werden müsste. Hierfür ist es nämlich nicht erforderlich, die Verriegelungsvorrichtung bzw. deren Gehäuse zu öffnen, da ein Austausch des flexiblen Zugmittels problemlos von außen erfolgen kann.

Des Weiteren kann es vorgesehen sein, dass die Spitze vom Sperrteil abgeschrägt oder angefarst ist, um somit das bewegliche Teil, insbesondere den Ladekabelstecker bei größerer Krafteinwirkung auch aus der Ladebuchse herausziehen zu können. Zu diesem Zweck kann die Schräge oder die Farse an der Spitze des Sperrteils entgegengesetzt zur Herausziehrichtung des beweglichen Teils aus der Vorrichtung angeordnet sein.

Bei der erfindungsgemäßen Verriegelungsvorrichtung kann es ferner vorgesehen sein, dass der Antrieb über ein Getriebe mit dem Sperrmittel mechanisch verbunden ist und zusammenwirkt. Ferner kann das Getriebe als Schneckengetriebe ausgestaltet sein, wobei es weiter denkbar ist, dass der Führungsteil des Sperrmittels in einem Schneckenrad des Schneckengetriebes beweglich, insbesondere längsverschieblich, geführt ist. Durch diese Anordnung lässt sich eine besonders kompakte Bauform der Verriegelungsvorrichtung erzeugen. Außerdem weist das Schneckengetriebe den Vorteil auf, dass sich aufgrund des hohen Übersetzungsverhältnisses des Getriebes eine exakte mechanische Ansteuerung des Sperrmittels erzeugen lässt. Ferner weist das Schneckengetriebe den Vorteil auf, dass es selbsthemmend ist, so dass eine Bewegung von der Abtriebsseite des Schneckengetriebes, d. h. also vom Sperrmittel her, nicht zu einer Bewegung des Antriebes führt. Folglich lässt sich das Sperrmittel nur durch den Antrieb bewegen. Selbstverständlich ist es auch denkbar, dass der Antrieb direkt das Sperrmittel, d. h. ohne Getriebe, bewegt. Hierbei kann z. B. ein Linearantrieb für das Sperrmittel zum Einsatz kommen. Zweckmäßigerweise wirkt dieser Antrieb mit dem Führungsteil des Sperrmittels zusammen und die vorgesehene Notentriegelung mit dem Sperrteil.

Auch ist es denkbar, dass das Getriebe als Schneckengetriebe ausgestaltet ist, wobei jedoch das Schneckenrad mit einer seitlichen Führungsbahn ausgestattet ist, womit das Sperrmittel zwischen der Ver- und Entriegelungsstellung insbesondere längsverschieblich, bewegbar ist. In dieser Führungsbahn läuft ein Führungsnocken, der mit dem Sperrmittel direkt oder indirekt zusammenwirkt, um dieses zwischen der Ver- und Entriegelungsstellung hin und her zu bewegen. Bei dieser Anordnung ist eine Drehachse des Schneckenrades orthogonal zur Bewegungsrichtung des Sperrmittels zwischen der Ver- und Entriegelungsstellung angeordnet. In diesem Fall läuft das Zugmittel nicht durch das Schneckenrad, sondern seitlich an diesem vorbei. Somit kann das Zugmittel relativ frei laufend in dem Gehäuse der Verriegelungsvorrichtung angeordnet werden. Es sei noch einmal an dieser Stelle erwähnt, dass das Zugmittel nicht nur ein Drahtseil, sondern auch eine Stange, Kette oder dergleichen aufweisen kann.

Um eine möglichst exakte Ansteuerung des Sperrmittels zu erzielen, kann es vorgesehen sein, dass ein zweiter Signalgeber bei der Verriegelungsvorrichtung vorhanden ist, der eine Drehposition des Schneckenrads bzw. eine Position des Führungsteils vom Sperrmittel mechanisch erfasst. Das entsprechende Signal des zweiten Signalgebers kann dann an eine Steuerelektronik der Verriegelungsvorrichtung weitergegeben werden, wodurch die elektronische Ansteuerung des Antriebs erfolgen kann. Die entsprechende Steuerungselektronik für die erfindungsgemäße Verriegelungsvorrichtung kann innerhalb des Gehäuses der Verriegelungsvorrichtung oder außerhalb angeordnet sein. Auch kann ein Teil der Fahrzeugelektronik die Aufgabe der Steuerelektronik für die Verriegelungsvorrichtung übernehmen.

Bei der erfindungsgemäßen Verriegelungsvorrichtung kann es ferner vorgesehen sein, dass die Verriegelungsvorrichtung durch die Fahrzeugelektronik, insbesondere ein elektronisches Sicherheitssystem, wie z. B. ein Zugangsberechtigungssystem oder eine Wegfahrsperre ansteuerbar ist. Zur elektrischen Energieversorgung der Verriegelungsvorrichtung kann eine Steckerbuchse vorgesehen sein, die mit einem fahrzeugseitigen Verbindungsstecker elektrisch verbindbar ist. Die zuvor erwähnte Steuerbuchse kann einteilig zum Gehäuse der Verriegelungsvorrichtung ausgestaltet sein. Über diese Steckerbuchse kann einerseits die elektrische Energieversorgung und andererseits auch eine Datenkommunikation zur Ansteuerung vorgenommen werden.

Auch ist es denkbar, dass die Verriegelungsvorrichtung ein internes Datenkommunikationselement aufweist, womit eine Datenverbindung mit einem externen Datenkommunikationselement herstellbar ist, welches z. B. an dem Ladekabel, insbesondere dem Ladekabelstecker angeordnet ist. Hierdurch lässt sich eine Identifizierung des Ladekabels selbst, sowie Informationen zur Energiezufuhr übertragen. Bei diesen Informationen kann es sich um die Spannung, den maximalen Strom, aber auch die Stromkosten oder dergleichen der elektrischen Energie handeln.

Wie bereits zuvor erwähnt worden ist, kann das Gehäuse der Verriegelungsvorrichtung zweiteilig ausgestaltet sein. Hierbei können innerhalb der Gehäusehälfte auch Halte-, Führungs- und/oder Aufnahmeelemente für die weiteren Bauteile, wie z. B. dem Antrieb, dem Getriebe, dem Sperrmittel, der Notentriegelung, dem Zugmittel, und den Signalgebern, angeordnet sein. Selbst die beweglichen Bauteile können über die entsprechenden Halte-, Führungs- und/oder Aufnahmeelemente beweglich im Gehäuse aufgenommen werden.

Des Weiteren ist die vorliegende Erfindung auch auf ein Verfahren, insbesondere nach Anspruch 15, zur Betätigung einer Verriegelungsvorrichtung zur Ver- und Entriegelung eines beweglichen Teils, insbesondere eines Ladekabelsteckers für ein Fahrzeug gerichtet, wobei ein Sperrmittel das bewegliche Teil verriegeln und entriegeln kann. Das erfindungsgemäße an dem Verfahren ist daran zu sehen, dass eine Notentriegelung für einen Notfall vorgesehen ist, die im Notfall nur durch einen berechtigten Benutzer zu betätigen ist, um das Sperrmittel aus seiner Verriegelungsstellung II in seine Entriegelungsstellung I zu überführen. Hierbei kann die erfindungsgemäße Verriegelungsvorrichtung zur Anwendung des Verfahrens vorgesehen sein.

Die Erfindung ist in diversen Ausgestaltungen durch die abhängigen Unteransprüche und die nachfolgende Beschreibung erläutert. Dabei gelten Merkmale und Details, die im Zusammenhang mit der erfindungsgemäßen Vorrichtung offenbart werden, auch im Zusammenhang mit dem erfindungsgemäßen Verfahren und umgekehrt, so dass bezüglich der Offenbarung zu den einzelnen Erfindungsaspekten stets wechselseitig Bezug genommen wird.

Weitere Maßnahmen und Vorteile der Erfindung ergeben sich aus den Ansprüchen, der nachfolgenden Beschreibung und den Zeichnungen. In den Zeichnungen ist die Erfindung in unterschiedlichen Ausführungsbeispielen dargestellt. Dabei können in den Ansprüchen und in der Beschreibung erwähnte Merkmale jeweils einzeln für sich oder in beliebiger Kombination erfindungswesentlich sein. Es zeigen:
- Figur 1: eine dreidimensionale Darstellung der erfindungsgemäßen Verriegelungsvorrichtung mit einem teilweise aufgeschnittenen Gehäuse für einen Einblick ins Innere,
- Figur 2: einen teilweisen Längsschnitt durch die Verriegelungsvorrichtung aus Figur 1,
- Figur 3: eine Seitenansicht der Längsseite der erfindungsgemäßen Verriegelungsvorrichtung aus den Figuren 1 und 2 mit einem zusätzlichen Betätigungselement für eine Notentriegelung,
- Figur 4: eine Schnittansicht A-A durch die Verriegelungsvorrichtung aus Figur 3,
- Figur 5: eine Schnittansicht B-B durch die Verriegelungsvorrichtung aus Figur 4 mit einer zusätzlich dargestellten Ladebuchse und einem Ladekabelstecker,
- Figur 6: einen Querschnitt durch eine Verriegelungsvorrichtung, so dass eine Draufsicht auf die inneren Bauteile möglich ist,
- Figur 7: eine dreidimensionale Darstellung einer weiteren erfindungsgemäßen Verriegelungsvorrichtung ohne Gehäuse in einer Entriegelungsstellung I des Sperrmittels,
- Figur 8: eine dreidimensionale Darstellung der Verriegelungsvorrichtung aus Figur 7 in einer Verriegelungsstellung II des Sperrmittels,
- Figur 9: eine dreidimensionale Darstellung der Verriegelungsvorrichtung aus den Figuren 7 und 8 in einer Entriegelungsstellung I bei einer Notentriegelung,
- Figur 10: eine Draufsicht auf eine weitere erfindungsgemäße Verriegelungsvorrichtung in einer Entriegelungsstellung I des Sperrmittels ohne eine erste Gehäusehälfte,
- Figur 11: eine Draufsicht auf die Verriegelungsvorrichtung aus Figur 10 in einer Verriegelungsstellung II des Sperrmittels.
- Figur 12: eine Draufsicht auf die Verriegelungsvorrichtung aus den Figuren 10 und 11 in einer Entriegelungsstellung I des Sperrmittels durch eine Notentriegelung,
- Figur 13: eine dreidimensionale Ansicht auf die Verriegelungsvorrichtung aus den Figuren 10 bis 12, die montiert an einer Ladebuchse angeordnet ist,
- Figur 14: eine Seitenansicht auf eine weitere erfindungsgemäße Verriegelungsvorrichtung,
- Figur 15: ein Schnitt B-B durch die Verriegelungsvorrichtung aus Figur 14,
- Figur 16: eine weitere Seitenansicht der Verriegelungsvorrichtung aus den Figuren 14 und 15 bei der Notentriegelung mit Ladebuchse,
- Figur 17: ein Schnitt C-C durch die Verriegelungsvorrichtung aus Figur 16 mit gesichertem beweglichen Teil in der Verriegelungsstellung II,
- Figur 18a: eine Seitenansicht einer weiteren Verriegelungsvorrichtung vergleichbar zu Figur 16,
- Figur 18b: ein Schnitt A-A durch Figur 18a, bei der ein Zugmittel mit einer angespritzten Dichtung zum Einsatz kommt,
- Figur 18c: eine Darstellung des ersten Endes vom Zugmittel in verschiedenen Ansichten,
- Figur 19a: ein weiterer Schnitt A-A durch eine vergleichbare Verriegelungsvorrichtung aus Figur 18a, bei der jedoch das erste Ende vom Zugmittel über einen Ansatzstutzen verfügt,
- Figur 19b: eine vergleichbare Darstellung zu Figur 18c, mit jedoch dem ersten Ende vom Zugmittel aus Figur 19a,
- Figur 20a: ein Schnitt A-A vergleichbar zu Figur 18b und 19a mit einem fest verbundenen flexiblen Zugmittelteil an dem ersten Ende vom Zugmittel und
- Figur 20b: eine Darstellung vergleichbar zu den Figuren 18c und 19b mit dem ersten Ende vom Zugmittel aus Figur 20a.

In den nachfolgenden Figuren sind gleiche technische Merkmale mit denselben Bezugszeichen dargestellt. Sofern sich die technischen Merkmale je nach Figur unterscheiden, wird darauf deutlich hingewiesen.

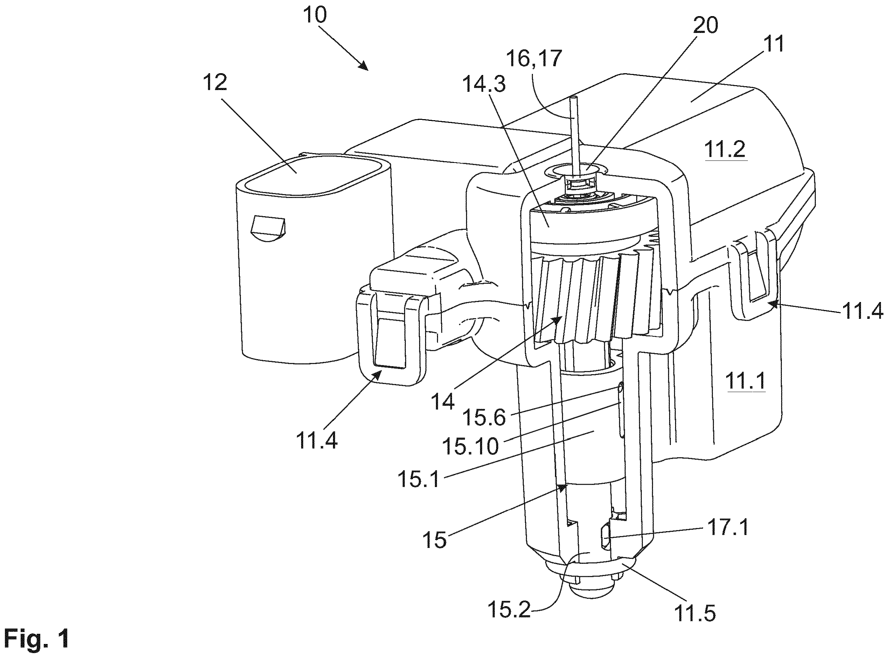

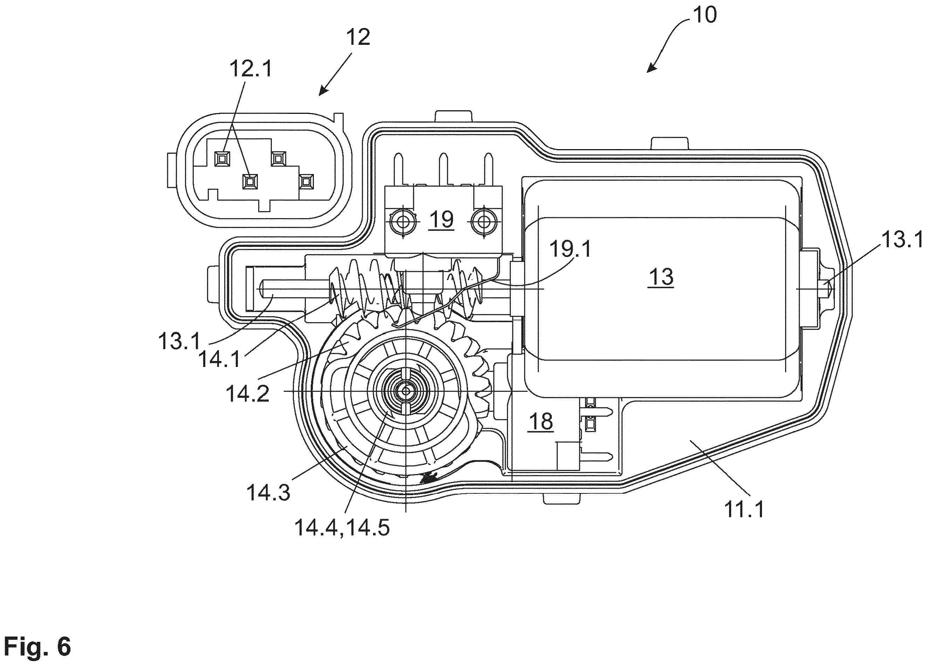

In der Figur 1 ist die erfindungsgemäße Verriegelungsvorrichtung 10 in einer dreidimensionalen Ansicht dargestellt, wobei ihr Gehäuse 11 zur besseren Übersicht teilweise aufgeschnitten worden ist, um das Innere, insbesondere die Bauteile 13 bis 19 darstellen zu können. Das Gehäuse 11 ist selbst zweiteilig aufgebaut und weist eine untere Gehäusehälfte 11.1 und obere Gehäusehälfte 11.2 auf. Zur Abdichtung der aufeinanderliegenden Gehäusehälften ist ein Nut-Federnsystem vorgesehen, wodurch eine Labyrinthdichtung erzeugt wird. Die beiden Gehäusehälften 11.1, 11.2 werden über Rastverbindungen 11.4 zusammengehalten, die seitlich an der Trennnaht zwischen den beiden Gehäusehälften 11.1, 11.2 angeordnet sind. Diese Rastverbindungen 11.4 bestehen aus Clipsverbindungen, die durch eine federnde Lasche aufgebaut sind, die mit keilförmigen Vorsprüngen mechanisch zusammenwirken, um insbesondere einen Formschluss zu erzeugen. Ferner ist an dem Gehäuse 11 eine Steckerbuchse 12 mit elektrischen Kontakten 12.1 (s. Figur 6) angeordnet, um eine elektrische Energieversorgung und ggf. auch eine Ansteuerung der Verriegelungsvorrichtung 10 zu ermöglichen. Die Steckerbuchse 12 ist in den vorliegenden Ausführungsbeispielen der erfindungsgemäßen Verriegelungsvorrichtung 10 einstückig und auch materialeinheitlich mit dem Gehäuse 11 ausgestaltet. Durch das aufgebrochene Gehäuse 11 ist ein Sperrmittel 15 erkennbar, welches über einen Antrieb 13 bewegbar ist. Zwischen dem Antrieb 13 und dem Sperrmittel 15 ist ein Getriebe 14, in Form eines Schneckengetriebes angeordnet, wobei das Schneckenrad 14.2 gut sichtbar ist, in dem das Sperrmittel 15 längsverschieblich aufgenommen ist. Ebenfalls ist an dem Schneckenrad 14.2 ein Steuermittel 14.3 für einen zweiten Sensor 19 angeordnet, der in Figur 6 besser erkennbar ist. In der Figur 1 ragt eine Notentriegelung 16, insbesondere in Form eines Zugmittel 17, aus der oberen Gehäusehälfte 11.2 heraus, die mit einer Dichtung 20 abgedichtet ist, um das Innere des Gehäuses 11 vor Umwelteinflüssen, wie Staub, Feuchtigkeit und dergleichen, zu schützen.

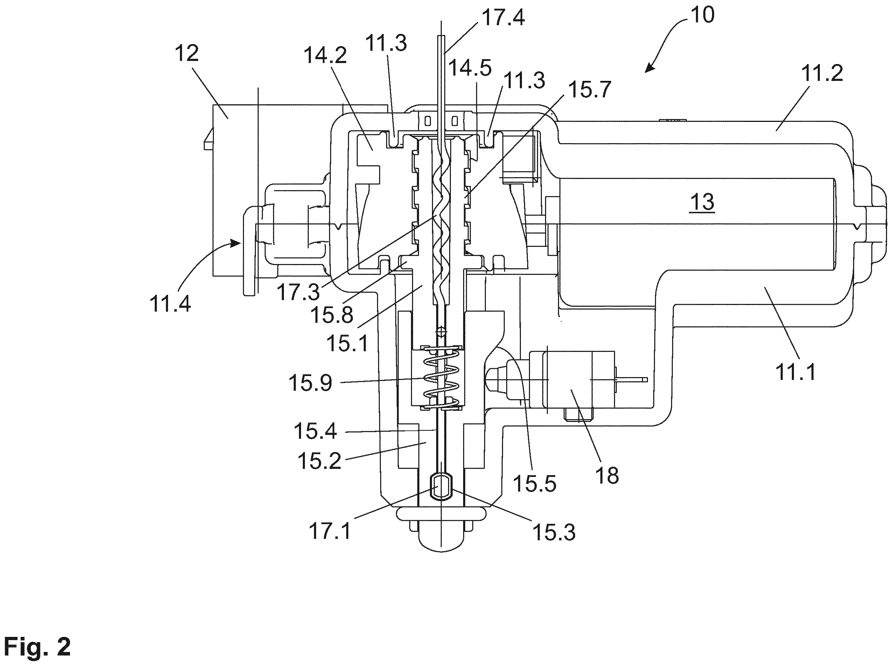

Die Figur 2 zeigt einen Längsschnitt durch die Verriegelungsvorrichtung 10 aus Figur 1. Dabei ist das Sperrmittel 15 mehrteilig aufgebaut und verfügt über ein Führungsteil 15.1, welches von dem Schneckenrad 14.2 angetrieben ist. Auch ist es denkbar, dass das Sperrmittel 15 direkt durch den elektromechanischen Antrieb 13 angetrieben wird. Im vorliegenden Fall ist jedoch das Sperrmittel 15 in einer Durchtrittsöffnung 14.4 im Schneckenrad 14.2 angeordnet und wirkt mechanisch über einen Führungsvorsprung 15.7 mit einer Führungsnut 14.5 im Schneckenrad 14.2 zusammen. Eine Drehung des Schneckenrads 14.2 verursacht somit ein Längsverschiebung des Sperrmittels 15, insbesondere des Führungsteils 15.1, so dass das Sperrmittel 15 zwischen seiner Entriegelungsstellung I und Verriegelungsstellung II hin und her verfahren werden kann. An dem Führungsteil 15.1 ist ferner ein Anschlag 15.8 angeordnet, der ebenfalls mit dem Schneckenrad 14.2 zusammenwirkt, so dass das Führungsteil 15.1 nur bis zu einer vordefinierten Tiefe in das Schneckenrad 14.2 einfahren kann. Für den Anschlag 15.8 ist eine entsprechende Ausnehmung am Schneckenrad 14.2 vorgesehen.

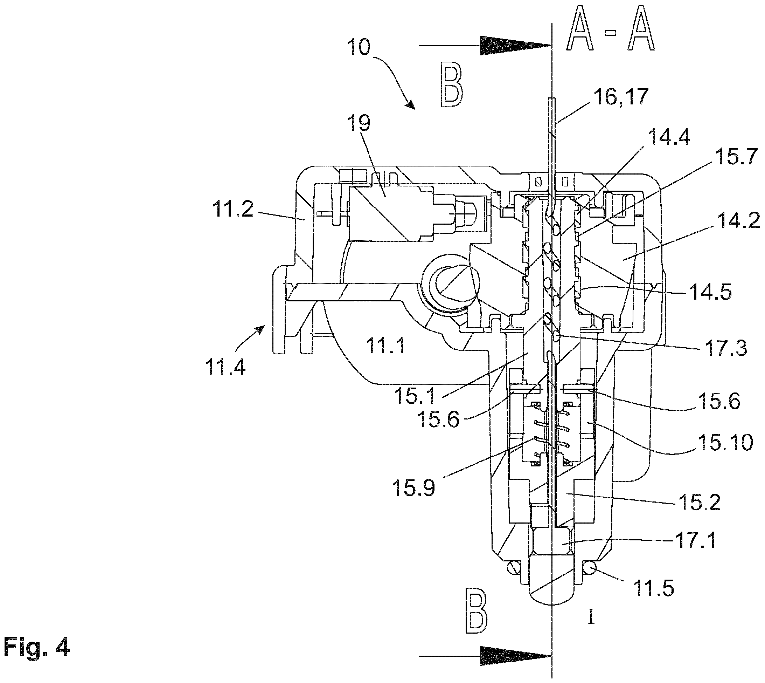

Wie weiter gut aus Figur 2 ersichtlich ist, ist das Sperrteil 15.2 längsverschieblich und somit relativ beweglich zum Führungsteil 15.1 angeordnet. Zwischen diesen beiden Teilen ist ein Federelement 15.9 vorgesehen, wodurch das Sperrteil 15.2 vom Führungsteil 15.1 weggedrückt wird. Im Sperrteil 15.2 ist eine Aufnahmeführung bzw. -öffnung für das Führungsteil 15.1 vorgesehen, in die das Führungsteil 15.1 eintauchen kann. In dieser Aufnahmeführung ist auch das bereits beschriebene Federelement 15.9 angeordnet, wobei es formschlüssig an Vorsprüngen vom Sperrteil 15.2 und Führungsteil 15.1 gehalten ist. Wie aus der Figur 4 deutlich wird, werden die beiden Teile 15.1, 15.2 des Sperrmittels 15 über zumindest ein Verbindungsteil 15.6, insbesondere in Form eines Verbindungsstiftes, zusammengehalten. Im vorliegenden Fall kommen sogar zwei Verbindungsstifte 15.6 zum Einsatz, die in einem Winkel von 180° zueinander angeordnet sind. Des Weiteren geht aus der Figur 2 deutlich hervor, dass das Zugmittel 17 im Inneren des Sperrmittels 15, insbesondere mittig, verläuft. Hierbei wird das Zugmittel 17 auch durch das Federelement 15.9 geführt, so dass die mittige Anordnung des Zugmittels 17 im Sperrmittel 15 besonders platzsparend ist. Des Weiteren weist das Zugmittel 17 ein Kompensationselement 17.3 auf, um eine Bewegung des Sperrmittels 15 zwischen der Ver-und Entriegelungsstellung kompensieren zu können. Somit ist es nicht erforderlich, dass bei einem Ausfahren des Sperrmittels 15 in die Verriegelungspositions II das Zugmittel 17 komplett bewegt werden muss. Das Kompensationselement 17.3 sorgt vielmehr dafür, dass eine Bewegung des Zugmittels 17 außerhalb des Gehäuses 11 bei einem Wechsel des Sperrmittels 15 von der Entriegelungsstellung I in die Verriegelungsstellung II nicht notwendig ist. Folglich können sowohl das erste Ende 17.1 als auch das zweite Ende 17.2 des Zugmittels 17 fest und unnachgiebig eingespannt oder angeordnet sein.

In der Figur 2 kommt ein flexibles Zugmittel 17.4 zum Einsatz, welches aus einem Seil, Drahtseil, Bowdenzug oder dergleichen bestehen kann. Das erste Ende 17.1 des Zugmittels 17 ist in einer Ausnehmung 15.3 im Sperrteil 15.2 formschlüssig gehalten und das flexible Zugmittel 17.4 verläuft weiter von dieser Ausnehmung 15.3 durch das Sperrteil 15.2 und das Federelement 15.9 zum Führungsteil 15.1. Im Führungsteil 15.1 ist das Kompensationselement 17.3 vom Zugmittel 17, insbesondere im Inneren, mittig angeordnet, wobei das Kompensationselement 17.3 durch eine Aufwicklung des flexiblen Zugmittels 17.4 realisiert ist. Durch diese Aufwicklung kann eine vordefinierte Längenausdehnung des Zugmittels 17 erzeugt werden. Bei einem starren Zugmittel 17 kann das Kompensationselement 17.3 aus einem aufgewickelten Seil, einer Feder oder einem sonstigen, mechanisch nachgiebigen Element bestehen. Da das Führungsteil 15.1 durch das Schneckenrad 14.2 geführt ist, wird auch die Notentriegelung 16 und insbesondere das Zugmittel 17 durch das Schneckenrad 14.2 geführt. Um das Getriebe 14 in dem Gehäuse 11 beweglich zu halten, sind Halte-, Führungs- und/oder Aufnahmeelemente 11.3 an der Innenseite der Gehäusehälften 11.1, 11.2 angeordnet, die in Führungsbahnen des Schneckenrades 14.2 eingreifen, um dieses beweglich im Gehäuse 11 zu lagern. Diese Halte-, Führungs- und/oder Aufnahmeelemente 11.3 dienen auch zur Anordnung des Antriebs 13, der Signalgeber 18, 19 und des restlichen Getriebes 14.

Um sicherzustellen, dass eine ordnungsgemäße Verriegelung des beweglichen Teils 22, insbesondere des Ladekabelsteckers 22, in der Verriegelungsstellung II stattgefunden hat, ist ein Steuermittel 15.5 für den ersten Sensor 18 an dem Sperrteil 15.2 angeordnet. Dieses Steuermittel 15.5 besteht aus einer Steuerkontur, die nockenartig am äußeren Umfang des Sperrteils 15.2 herausragt und mit dem ersten Signalgeber 18 zusammenwirkt. In der Figur 2 ist das Sperrmittel 15 in seiner Entriegelungsstellung I dargestellt. Erst wenn das Sperrteil 15.2 in eine Ausnehmung 22.1 im beweglichen Teil 22, insbesondere dem Ladekabelstecker 22, einfahren kann, erfasst der erste Signalgeber 18 durch die Steuerkurve 15.5 eine örtliche Verschiebung des Sperrmittels 15, insbesondere des Sperrteils 15.2. Dieses Messsignal kann vom ersten Signalgeber 18 an die Steuerelektronik der Verriegelungsvorrichtung und/oder die Fahrzeugelektronik weitergegeben werden.

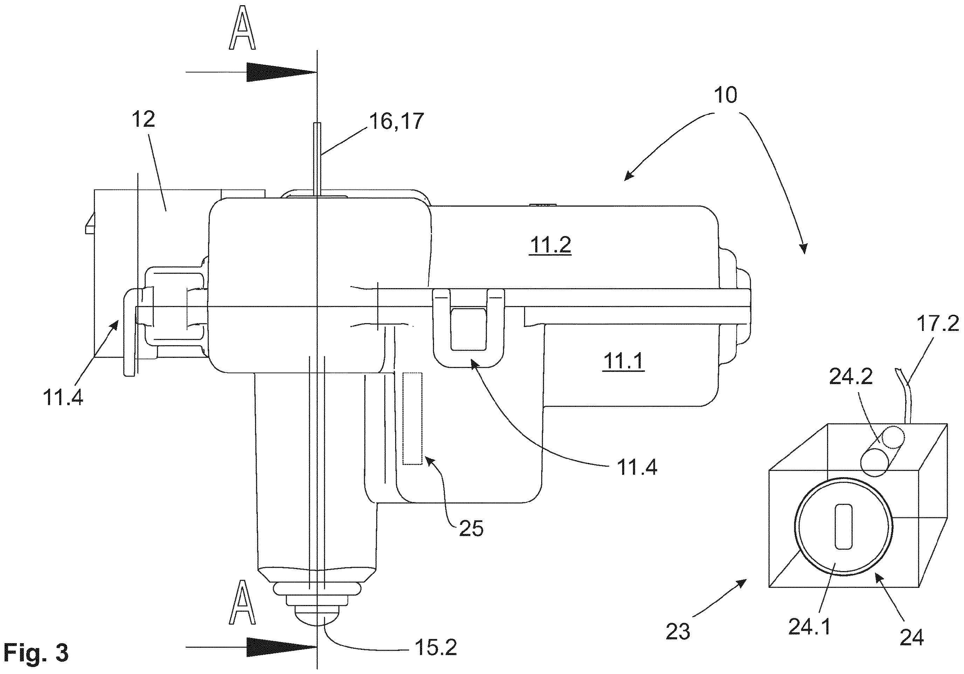

Die Figur 3 zeigt ein weiteres Ausführungsbeispiel der Verriegelungsvorrichtung 10, wobei zusätzlich nur ein Betätigungselement 23 vorgesehen ist, um die Notentriegelung 16 zu betätigen bzw. an dem Zugmittel 17 zu ziehen. Dabei weist das Betätigungselement 23 eine Schließvorrichtung 24 auf, die von außen bei einem Fahrzeug durch einen Schließzylinder 24.1 betätigbar ist. Sofern der berechtigte Bediener über den entsprechenden Schlüssel verfügt, kann er den mechanischen Schließzylinder 24.1 drehen, wodurch eine Zugkraft am Zugmittel 17 erzeugt wird. Das Zugmittel 17 endet mit seinem zweiten Ende 17.2 an oder in dem Betätigungselement 23 und kann dort beispielsweise auf der angedeuteten Welle 24.2 durch eine Drehung des Schließzylinders 24.1 aufgewickelt werden. In den weiteren Ausführungsbeispielen der Verriegelungsvorrichtung 10 aus den Figuren 1, 2 und 4 bis 6 kann das Betätigungselement 23 im Inneren des Fahrzeugs angeordnet sein, wobei eine einfache Zugkraft auf das Zugmittel 17 ausreicht, um eine Notentriegelung vornehmen zu können. Da in diesem Fall das Betätigungselement 23 im Fahrzeuginneren angeordnet ist, muss der Bediener zunächst einen Zugang zum Fahrzeuginneren erreichen, um dann das Betätigungselement 23 bedienen zu können.

In der Figur 3 ist ferner noch ein internes Datenkommunikationselement 25 gestrichelt angedeutet, welches mit einem externen Datenkommunikationsmittel, z. B. vom Ladekabelstecker 22 kommunizieren kann.

In der Figur 4 ist ein Schnitt A-A durch die Verriegelungsvorrichtung 10 aus Figur 3 gezeigt. Dabei ist deutlich erkennbar, dass ein zweiter Signalgeber 19 an einer Innenseite der oberen Gehäusehälfte 11.2 durch Halte-, Führungs- und/oder Aufnahmeelemente 11.3 angeordnet ist. Des Weiteren ist auch gut das mechanische Zusammenwirken vom Getriebe 14 mit dem Sperrmittel 15 erkennbar. Außerdem lässt sich die Anordnung und Befestigung des Zugmittels 17 im Sperrmittel 15 gut erkennen. Dabei weist das erste Ende 17.1 des Zugmittels 17 eine Verdickung auf, die in der Ausnehmung 15.3 eingebettet ist und dort formschlüssig gehalten wird. Das weitere Zugmittel 17 wird dann durch den Durchbruch 15.4 geführt und gelangt durch das Federelement 15.9 und das Führungsteil 15.1 zur Dichtung 20, um dann aus dem Gehäuse 11 der Verriegelungsvorrichtung 10 austreten zu können. Das zweite Ende 17.2 des Zugmittels 17 endet an dem Betätigungselement 23, welches in der Figur 4 nicht dargestellt ist. Durch die mittige und zentrale Anordnung des Zugmittels 17 im Sperrmittel 15 ist eine besonders einfache Montage möglich. Auch lässt sich das Zugmittel 17 auf einfache Art und Weise austauschen, falls es einmal defekt sein sollte.

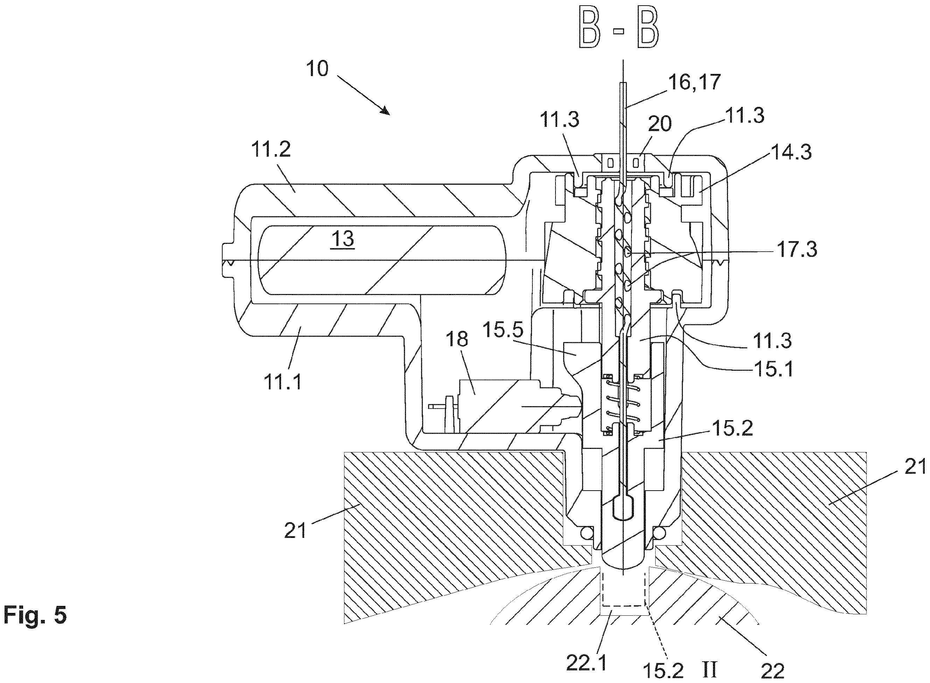

In der Figur 5 ist der Schnitt B-B durch die Verriegelungsvorrichtung 10 aus Figur 3 dargestellt. Zusätzlich ist das bewegliche Teil 22 in Form eines Ladekabelsteckers 22 angedeutet, um die Funktionsweise der Verriegelungsvorrichtung 10 besser erläutern zu können. In Figur 5 wird davon ausgegangen, dass das bewegliche Teil 22 aus dem Ladekabelstecker 22 besteht. Dieses wird in die Ladebuchse 21 eingeführt, um somit ein Fahrzeug mit Energie durch das Ladekabel und den Ladekabelstecker 22 zu versorgen. Die Verriegelungsvorrichtung 10 ist mit der Ladebuchse 21 befestigt, wobei es auch denkbar ist, dass das Gehäuse 11 der Verriegelungsvorrichtung 10 auch gleichzeitig die Ladebuchse 21 bildet. Wird nun der Ladekabelstecker 22 in die Ladebuchse 21 eingeführt, so soll beim Ladevorgang eine Verriegelung stattfinden, damit der Ladevorgang nicht durch Unberechtigte abgebrochen oder beeinflusst werden kann. Zu diesem Zweck verriegelt das Sperrmittel 15 den Ladekabelstecker 22, in dem es aus seiner Entriegelungsstellung I in seine Verriegelungsstellung II bewegt wird. Im Vorliegenden Fall wird das Sperrmittel 15, welches insbesondere die Form eines Sperrbolzens aufweist, ausschließlich längs verschoben, wodurch ein geringer Platzbedarf in der Verriegelungsvorrichtung 10 notwendig ist. Um das äußere Ende des Gehäuses 11 zu verstärken, an dem das Sperrmittel 15 austritt, ist ein Ring 11.5 vorgesehen, der insbesondere aus Stahl bestehen kann. In der Figur 5 ist die Verriegelungsstellung II des Sperrteils 15.2 gestrichelt angedeutet. Hierbei wirkt das Sperrteil 15.2 formschlüssig mit der Ausnehmung 22.1 im Ladekabelstecker 22 zusammen, wodurch der Ladekabelstecker 22 zuverlässig und fest in der Ladebuchse 21 gehalten bzw. gesichert ist.

Im Notfall findet eine Entriegelung des beweglichen Teils, insbesondere des Ladekabelsteckers 22, dadurch statt, dass die Notentriegelung 16 betätigt wird, was insbesondere durch einen Zug an dem Zugmittel 17 erfolgt. Wie in Figur 5 gut erkennbar ist, wird somit das Sperrteil 15.2 durch das angreifende erste Ende des Zugmittels 17 gegen die Kraft des Federelementes 15.9 zum Führungsteil 15.1 verschoben und gibt somit die Ausnehmung 22.1 vom beweglichen Teil 22 frei, wodurch das bewegliche Teil 22 wieder bewegbar wird. Ein Zug am Zugmittel 17 bewirkt keine Verschiebung oder Drehung des Antriebs 13 oder des Getriebes 14. Vielmehr taucht das Führungsteil 15.1 in die Aufnahmeführung im Sperrteil 15.2 ein (wobei nur das Sperrteil bewegt wird) und löst dabei den Formschluss zwischen dem Sperrmittel 15 und dem beweglichen Teil 22, insbesondere dem Ladekabelstecker 22, auf. Ein Notfall tritt dann ein, wenn z. B. die Verriegelungsvorrichtung 10 nicht mit elektrischer Energie versorgt werden kann oder ein Steuerungsfehler vorliegt, oder ein Defekt in der Verriegelungsvorrichtung 10 vorhanden ist, so dass eine ordnungsgemäße Funktion der Verriegelungsvorrichtung 10 nicht mehr gegeben ist.

In der Figur 6 ist das Getriebe 14 gut als Schneckengetriebe 14 erkennbar. Dabei sitzt die Schnecke 14.1 drehfest auf einer Antriebswelle 13.1 des elektromechanischen Antriebs 13, der insbesondere als Elektromotor ausgestaltet ist. Die Drehbewegung der Schnecke 14.1 wird über die vorhandene Verzahnung auf das Schneckenrad 14.2 übertragen, wodurch im Inneren des Schneckenrades 14.2 das Sperrmittel 15 längs verschoben wird. Oberhalb des eigentlichen Schneckenrades 14.2 ist ein Steuermittel 14.3, in Form einer Steuerkurve 14.3, angeordnet, wodurch sich der Antrieb 13 exakt steuern lässt. Außerdem lassen sich aus den Signalen des ersten und zweiten Signalgebers 18, 19 auch die exakten Stellungen des Sperrmittels 15, insbesondere vom Führungsteil 15.1 und Sperrteil 15.2, erfassen. Der zweite Signalgeber 19 tastet über ein Schaltblech 19.1 die Steuerkurve 14.3 ab, wobei das Schaltblech 19.1 eine federnde Wirkung auf den zweiten Signalgeber 19 ausüben kann.

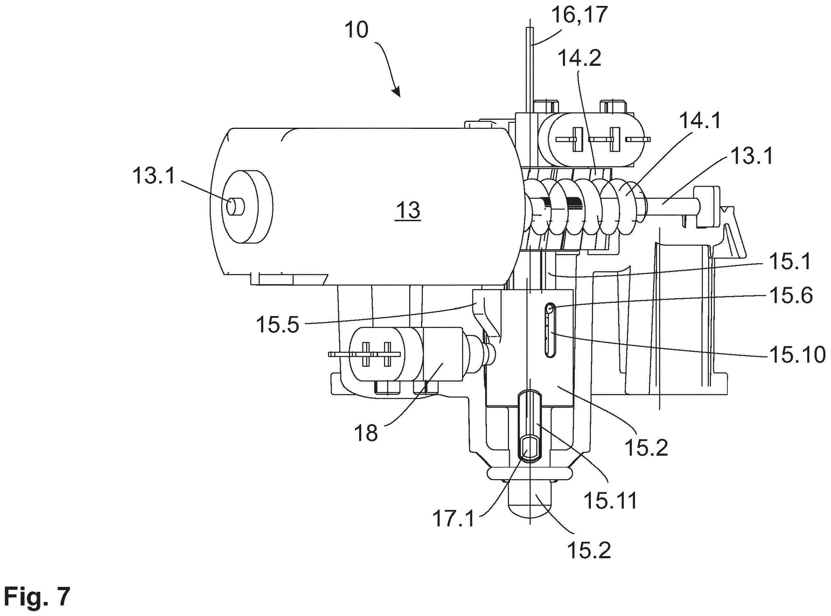

In den weiteren Figuren 7 bis 9 ist eine weitere Variante der erfindungsgemäßen Verriegelungsvorrichtung 10 aufgeführt. Diese unterscheidet sich nur (gemeint ist ausschließlich) durch die zuvor beschriebenen Varianten der erfindungsgemäßen Verriegelungsvorrichtung 10 durch einen Freiraum 15.11 im Sperrmittel 15 für das Zugmittel 17. Im konkreten Fall ist dieser Freiraum 15.11 als Langloch 15.11 für das erste Ende 17.1 des Zugmittels 17 ausgestaltet. In den Figuren 1 bis 6 ist der vergleichbare Freiraum 15.11 nur als passende Ausnehmung 15.3 für das erste Ende 17.1 des Zugmittels 17 ausgestaltet, so dass eben kein Spiel für das Zugmittel vorhanden ist und das erste Ende 17.1 des Zugmittels 17 jeder Bewegung des Sperrmittels 15 insbesondere des Sperrteils 15.2 zwischen der Verriegelungsstellung II und der Entriegelungsstellung I nachvollzieht.

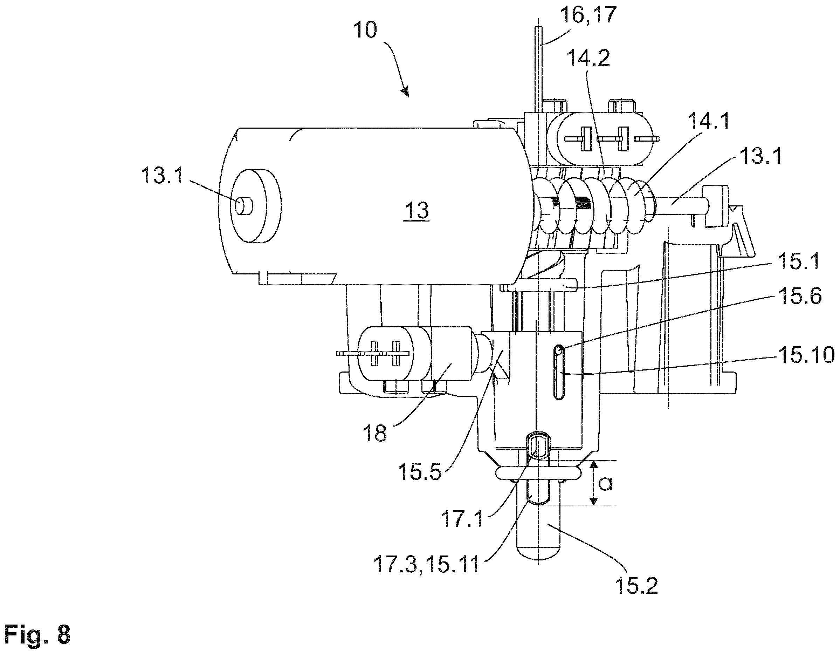

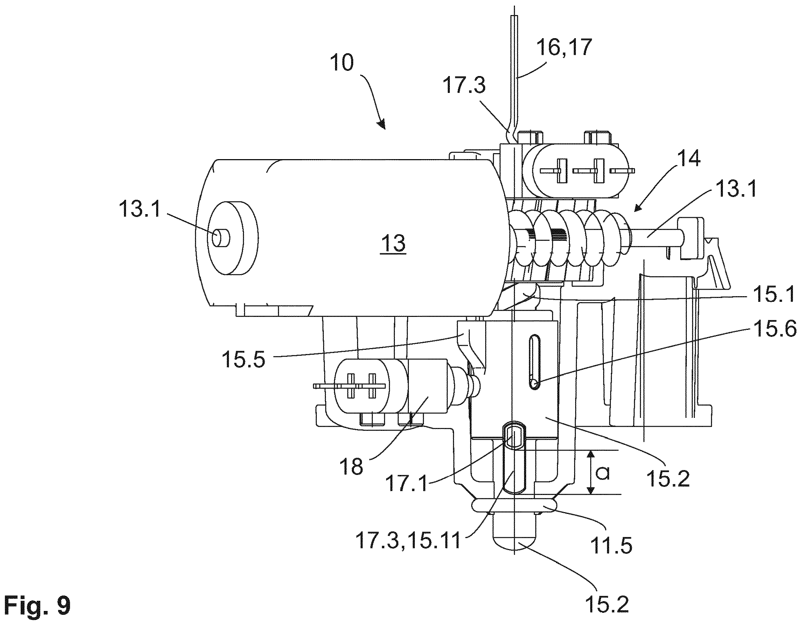

In den Figuren 7 bis 9 ist dargestellt, wie sich das Sperrmittel 15 im Normalfall zwischen der Verriegelungsstellung II und Entriegelungsstellung I hin- und herbewegt. Die Notentriegelung ergibt sich dann ausschließlich aus der Figur 9. In Figur 7 befindet sich das Sperrmittel 15 in seiner Entriegelungsstellung I, wobei das erste Ende 17.1 des Zugmittels sich im unteren Bereich des Freiraums 15.11 im Sperrteil 15.2 befindet. Wird nun das Sperrmittel 15 durch den Antrieb 13 von seiner Entriegelungsstellung I in seine Verriegelungsstellung II überführt, so verharrt das Zugmittel 17, insbesondere das erste Ende 17.1 bewegungslos in seiner bisherigen Position und nur das Sperrmittel 15, insbesondere das Sperrteil 15.2, wird verschoben. Folglich ergibt sich eine Relativbewegung zwischen dem ersten Ende 17.1 des Zugmittels 17 und dem Sperrmittel 15, insbesondere dem Sperrteil 15.2. Dieses ist daran zu erkennen, dass in der Figur 8 nunmehr das erste Ende 17.1 des Zugmittels 17 im oberen Bereich (im Gegensatz zur Figur 7) des Freiraums 15.11 im Sperrteil 15.2 angeordnet ist, was durch den Abstand a u.a. in der Figur 8 angedeutet ist. Folglich wurde durch den Antrieb 13 nur das Sperrmittel 15 aus der Verriegelungsvorrichtung 10 ausgefahren, ohne jedoch das Zugmittel 17 dabei zu betätigen bzw. in seiner Position zu verschieben. Es versteht sich von selbst, dass das Sperrmittel 15 aus seiner Verriegelungsstellung II in Figur 8 im Normalfall durch den Antrieb 13 problemlos wieder in seine Entriegelungsstellung I in Figur 7 überführt werden kann, ohne dabei ebenfalls das Zugmittel 17 zu betätigen.

Ausgehend von Figur 8, in der nun das Sperrmittel 15 in seiner Verriegelungsstellung II angeordnet ist, wird nun die Notentriegelung in Figur 9 beschrieben. Dabei wird nun nur das Sperrteil 15.2 durch das Zugmittel 17 betätigt ohne das der Antrieb13 genutzt wird. Das Sperrmittel 15 befindet sich üblicherweise in seiner Verriegelungsstellung II und wird nun im Notfall betätigt. Hierzu wird an dem Zugmittel 17 eine Zugkraft aufgebracht bzw. erfolgt eine Betätigung, die dazu führt, dass das Zugmittel mit seinem ersten Ende 17.1 das Sperrteil 15.2 von seiner Verriegelungsstellung II in seine Entriegelungsstellung I überführt. Dabei wird ebenfalls eine Relativbewegung zwischen dem Sperrteil 15.2 und dem Führungsteil 15.1 erzeugt, was sehr gut an der Stellung des Verbindungsteils 15.6 in dem dafür vorgesehenen Langloch 15.10 zu erkennen ist. Bei der Notentriegelung wird das Sperrteil 15.2 gegen die Federkraft des Federelements 15.9 in das Führungsteil 15.1 hineingezogen, so dass auch das Verbindungsteil 15.6 in der Figur 9 sich nunmehr im unteren Bereich des Langlochs 15.10 befindet. In den Figuren 7 und 8 ist hingegen das Verbindungsteil 15.6 im oberen Bereich des Langlochs 15.10 angeordnet, da das vorhandene Federelement 15.9 das Sperrteil 15.2 maximal aus dem Führungsteil 15.1 herausdrückt. Wie in Figur 9 weiter zu erkennen ist, weist ebenfalls das Zugmittel 17 ein Kompensationselement 17.3 auf. In den Figuren 7 bis 9 dient der Freiraum 15.11 bzw. das entsprechende Langloch 15.11 ebenfalls als zusätzliches Kompensationselement für das Zugmittel 17.

Zur besseren Verdeutlichung ist die erfindungsgemäße Vorrichtung in den Figuren 7 bis 9 ohne Gehäuse dargestellt, welches jedoch selbstverständlich vorhanden ist.

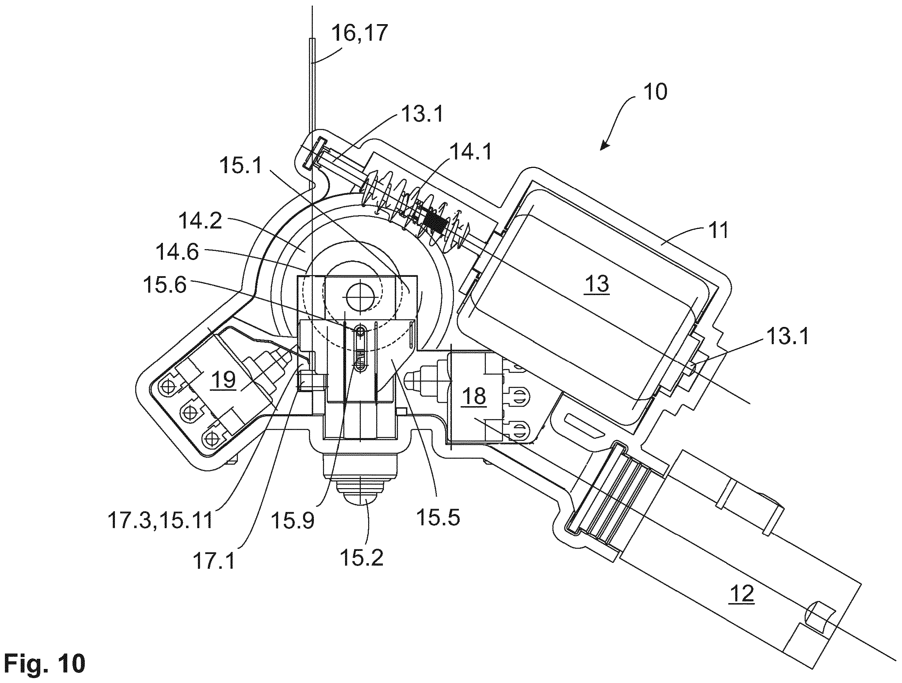

In den weiteren Figuren 10 bis 13 ist eine zusätzliche Variante der erfindungsgemäßen Verriegelungsvorrichtung vorgesehen, die sich nur durch das unterschiedlich ausgestaltete Getriebe 14 von den beiden zuvor genannten Varianten der erfindungsgemäßen Verriegelungsvorrichtung unterscheidet. Ferner ist hierbei das Zugmittel 17 nicht (mittig) durch das Schneckenrad 14.2 geführt, sondern wird seitlich an diesem vorbei geführt. Auch das Führungsteil 15.1 des Sperrmittels 15 ist nicht innerhalb des Schneckenrads 14.2 angeordnet, sondern wird seitlich von dem Schneckenrad 14.2, insbesondere einer zusätzlich vorgesehenen Führungsbahn 14.6 bewegt. Darüber hinaus sind keine Änderungen bei der Verriegelungsvorrichtung aus den Figuren 10 bis 13 zu den vorhergehenden Varianten vorhanden.

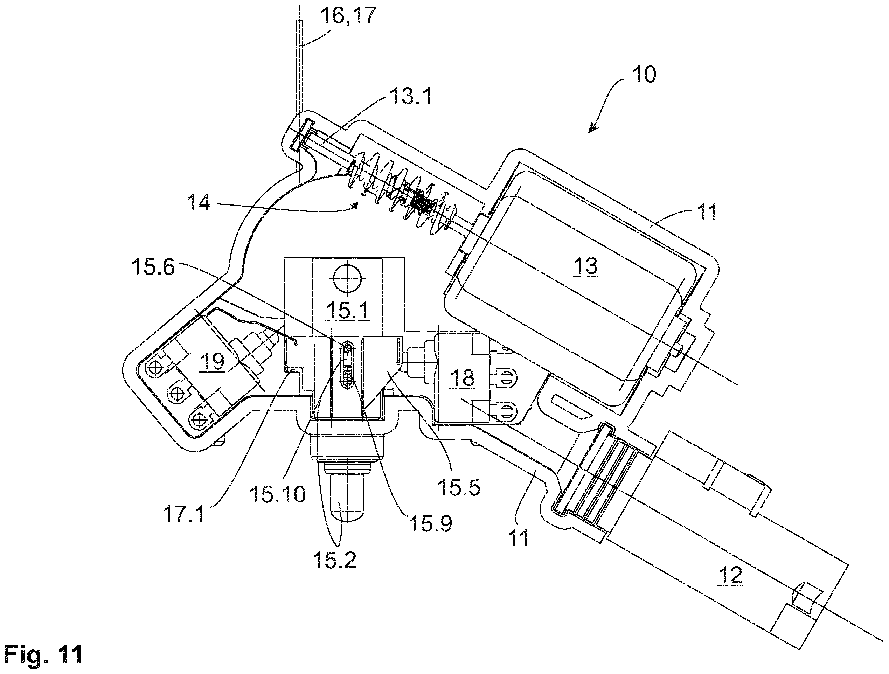

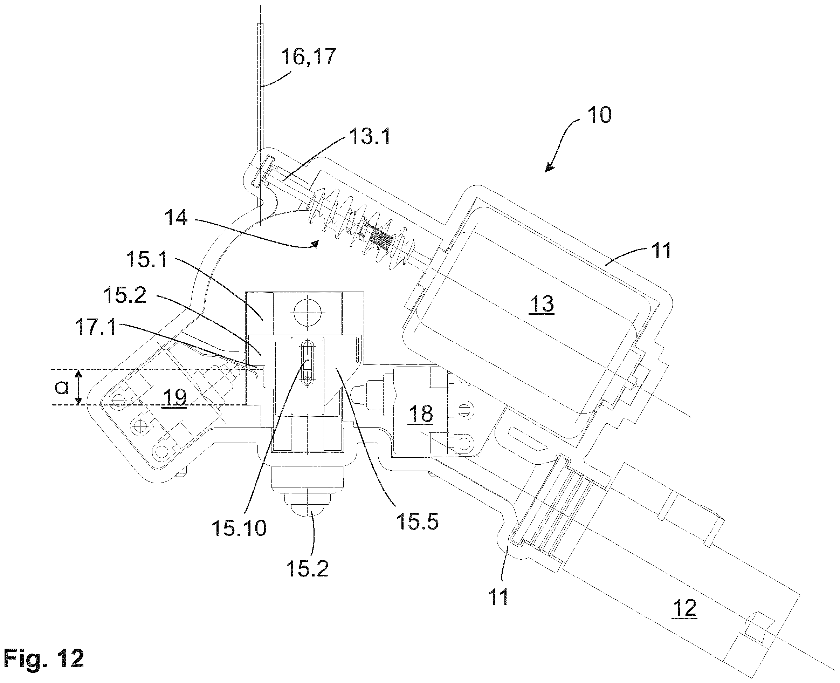

In der Figur 10 ist vergleichbar zu Figur 7 die entsprechende Verriegelungsvorrichtung 10 in der Entriegelungsstellung I des Sperrmittels 15, insbesondere des Sperrteils 15.2, dargestellt. Hierbei ist gut der seitliche Freiraum 15.11 für das erste Ende 17.1 des Zugmittels 17 zu erkennen. Dabei ist über dem ersten Ende 17.1 des Zugmittels 17 ein Spiel zum Sperrteil 15.2 vorgesehen, so dass sich auch dieses Sperrmittel 15 frei zwischen seiner Verriegelungsstellung II und seiner Entriegelungsstellung I hin- und herbewegen kann, ohne im Normalfall das Zugmittel 17 zu verschieben. In der Verriegelungsvorrichtung 10 aus den Figuren 10 bis 12 wird das Sperrmittel 15 durch das Schneckengetriebe 14, insbesondere das Schneckenrad 14.2 betätigt. Allerdings ist das Führungsteil 15.1 des Sperrmittels 15 nicht innerhalb des Schneckenrads 14.2 angeordnet, sondern verläuft seitlich neben dem Schneckenrad 14.2. Um eine mechanische Wirkverbindung zwischen dem Schneckenrad 14.2 und dem Sperrmittel zu erzeugen, ist im Schneckenrad 14.2 eine spiralförmige Führungsbahn 14.6 angeordnet, in der ein Führungsnocken verläuft, der mit dem Sperrmittel 15 verbunden ist. Die spiralförmige Führungsbahn 14.6, die seitlich im Schneckenrad 14.2 angeordnet ist, ist in der Figur 10 angedeutet. Zur besseren Übersicht ist in den Figuren 11 und 12 auf eine Darstellung des Schneckenrads 14.2 verzichtet worden, welches jedoch vorhanden ist.

In der Figur 11 ist das Sperrmittel 15, insbesondere das Sperrteil 15.2 in seiner Verriegelungsstellung II dargestellt. Hierbei ist erkenntlich, dass nunmehr über dem ersten Ende 17.1 des Zugmittels 17 kaum noch ein bzw. kein Spiel zwischen dem Zugmittel 17 und dem Sperrteil 15.2 vorgesehen ist, da dieses in den Freiraum 15.11, bzw. in den oberen Bereich davon, eingetaucht ist (siehe vergleichend hierzu Figur 8). Soll nun eine Notentriegelung stattfinden, so reicht ein Zug am Zugmittel 17 bzw. eine Betätigung des Zugmittels 17 aus, um das Sperrteil 15.2 relativ zum Führungsteil 15.1 zu bewegen, so dass dieses die Entriegelungsstellung I einnimmt. In Figur 12 ist das entsprechende Sperrmittel 15 bzw. das Sperrteil 15.2 in der Entriegelungsstellung I bei einer Notentriegelung dargestellt. Hierbei taucht das Sperrteil 15.2 in das Führungsteil 15.1 durch einen Zug am Zugmittel 17 ein. Dieses ist vergleichbar zu Figur 9 daran erkennbar, dass sich das Verbindungsteil 15.6 nunmehr im unteren Bereich des Langlochs 15.10 befindet.

Auch in dem Ausführungsbeispiel aus den Figuren 10 bis 13 kann ein zusätzliches Kompensationselement 17.3 im Zugmittel 17 vorgesehen sein.

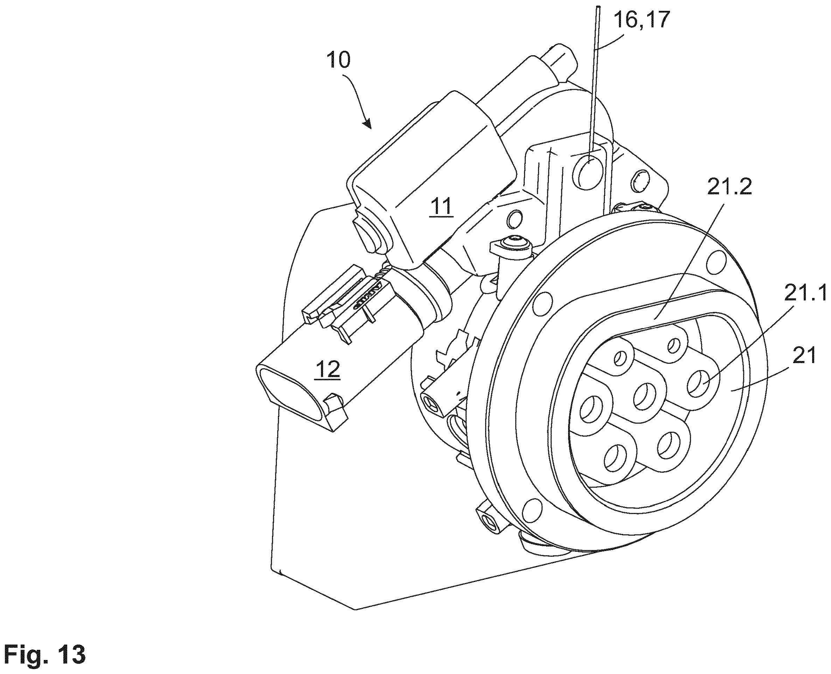

In der Figur 13 ist eine dreidimensionale Außenansicht der Verriegelungsvorrichtung 10 aus den Figuren 10 bis 12 dargestellt. Hierbei ist auch die Ladebuchse 21 mit ihren elektrischen Kontakten 21.1 ersichtlich. Ebenfalls ist zu erkennen, dass die Ladebuchse 21 einen Verpolungsschutz 21.2 aufweist, der als abgeflachte Stelle in der sonst rund ausgestalteten Ladebuchse 21 ausgestaltet ist. Somit kann ein entsprechender Ladekabelstecker 22 nur in einer Position in die Ladebuchse 21 eingeführt werden.

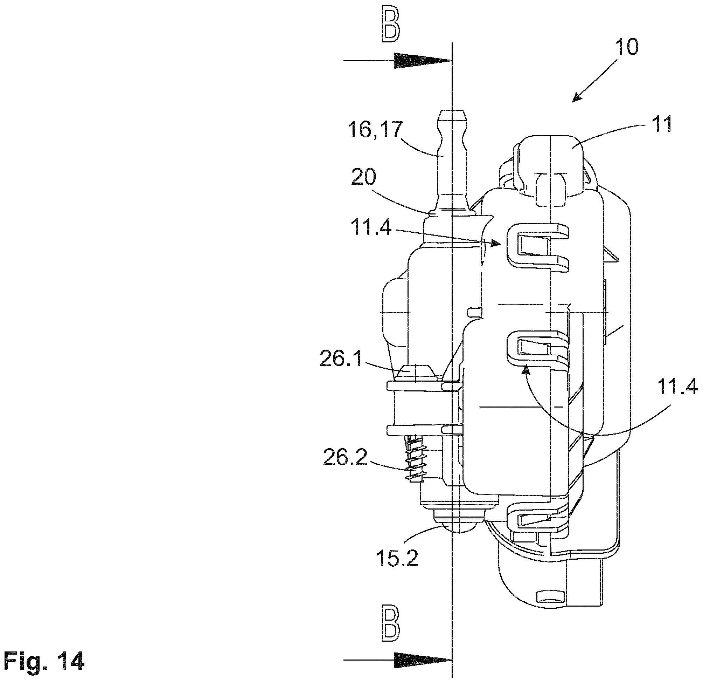

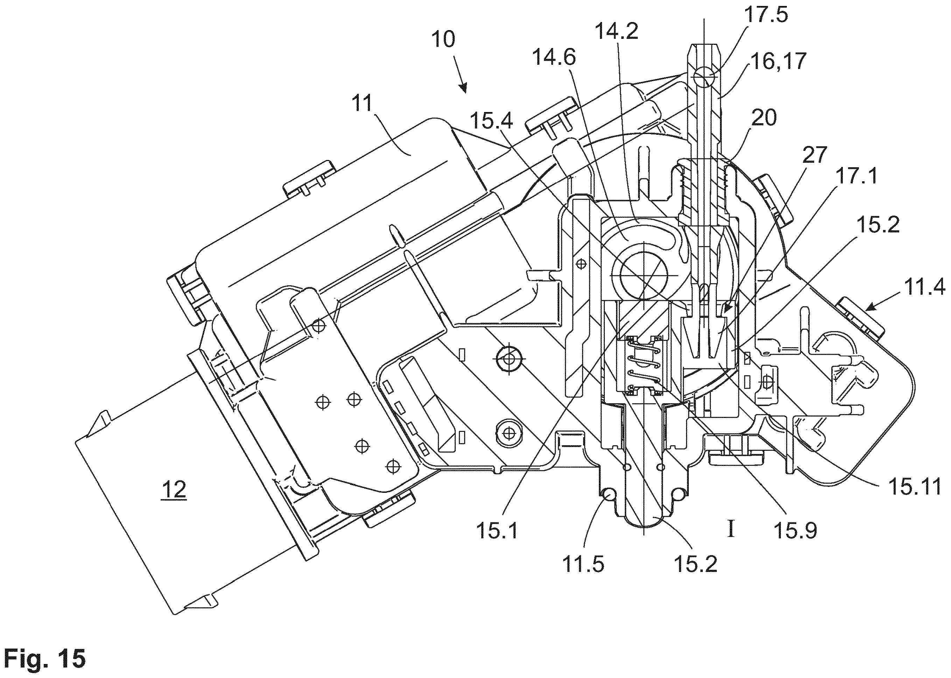

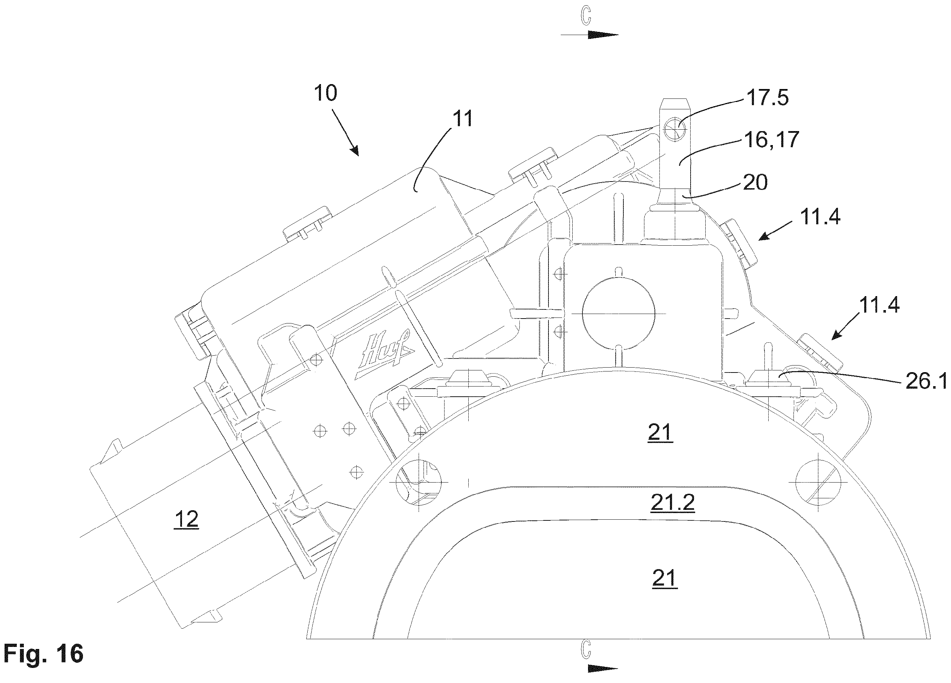

In der Figur 14 ist eine weitere Variante der erfindungsgemäßen Verriegelungsvorrichtung 10 dargestellt. Hierbei ist gut zu erkennen, wie die beiden Gehäusehälften 11.1 und 11.2 über diverse Rastverbindungen 11.4 miteinander formschlüssig verbunden werden. Zweckmäßigerweise ist das Gehäuse 11 ein Kunststoffspritzgussteil. Ferner wird das Gehäuse 11 der Verriegelungsvorrichtung 10 über z. B. eine oder mehrere Schrauben 26 mit der Ladebuchse 21 form- und/oder auch kraftschlüssig verbunden. Damit die Verriegelungsvorrichtung 10 austauschbar ist, kann ein Werkzeugschlüsselansatz am Schraubenkopf 26.1 vorgesehen sein. Über das Schraubengewinde 26.2 wird die Verriegelungsvorrichtung 10 an der Ladebuchse 21 sicher befestigt. Um die Montage der Verriegelungsvorrichtung 10 zu vereinfachen, kann das Zugmittel 17 zwei- oder mehrteilig ausgestaltet sein, wobei das erste Ende 17.1 unlösbar aber beweglich mit der Verriegelungsvorrichtung 10 verbunden ist. An diesem ersten Zugmittelende 17.1 kann eine Öse 17.5 in Form einer Bohrung vorgesehen sein, in die dann ein Bowdenzug, eine Stange, Kette oder dergleichen befestigt werden kann, um das gesamte Zugmittel 17 mit dem Betätigungselement 23 zu verbinden. Die zuvor erwähnte Öse 17.5 ist in der Figur 15 und 16 besser dargestellt.

In der Figur 15 ist der Schnitt B-B durch die Figur 14 gezeigt. Diese erfindungsgemäße Verriegelungsvorrichtung 10 unterscheidet sich von den vorherigen Ausführungsformen nur durch die Spitze des ersten Endes 17.1 vom Zugmittel 17. Dieses Ende 17.1 ist pfeilförmig ausgestaltet und bildet mit einem Vorsprung im Durchbruch 15.4 vom Sperrteil 15.2 einen Formschluss. Die Verbindung zwischen dem Zugmittel 17 und dem Sperrmittel 15, insbesondere dem Sperrteil 15.2, ist in diesem Fall als Rastmittel 27 ausgestaltet. In der Figur 15 befindet sich das Sperrmittel 15 in seiner Entriegelungsstellung I, die durch eine Notentriegelung erzielt worden ist. In diesem Fall wirkt der kragenförmige Rand der pfeilförmigen Spitze des ersten Endes 17.1 vom Zugmittel 17 formschlüssig mit dem kreisförmigen Vorsprung im Durchbruch 15.4 zusammen. Somit ist die Notentriegelung 16 in der Lage durch das Zugmittel 17 das Sperrmittel 15, insbesondere das Sperrteil 15.2, aus seiner Verriegelungsstellung II in die Entriegelungsstellung I zu überführen.

Wie sich aus Figur 15 weiter ergibt, ist auch die Montage des ersten Endes 17.1 des Zugmittels 17 denkbar einfach, da dieses nur durch einen leichten Druck in den Durchbruch 15.4 eingeführt werden muss, bis das Rastmittel 27 formschlüssig verrastet ist. Zu diesem Zweck kann das gesamte Zugmittel 17 durch eine lineare Bewegung montiert werden. Um eine Bewegung des Sperrmittels 15 im Normalfall zu erreichen ist ein Freiraum 15.11 im Sperrteil 15.2 vorgesehen, in den die pfeilförmige Spitze vom ersten Ende 17.1 des Zugmittels 17 eintauchen kann ohne selbst eine Bewegung zu vollziehen. Um die federnde Eigenschaft der pfeilförmigen Spitze vom ersten Ende 17.1 des Zugmittels 17 zu verbessern, kann in der Spitze ein Längsschnitt vorgesehen sein.

In der Figur 16 ist eine weitere Seitenansicht der Verriegelungsvorrichtung 10 aus den Figuren 14 und 15 dargestellt. Hierbei ist die Verriegelungsvorrichtung an der Ladebuchse 21 über zumindest die beiden sichtbaren Schrauben 26 befestigt. Um die volle Funktionsfähigkeit dieser Verriegelungsvorrichtung 10 zu erreichen, muss noch die Notentriegelung 16 vervollständigt werden, indem an der Öse 17.5 vom ersten Ende 17.1 des Zugmittels 17 das zweite Ende 17.2 angeschlossen oder verbunden wird. Hierdurch lässt sich insgesamt eine leichte Montage der Verriegelungsvorrichtung 10 realisieren. Das erste Ende 17.1 des Zugmittels 17 ist in den Figuren 14 bis 17 über eine Balgendichtung 20 zum Gehäuse 11 hin abgedichtet.

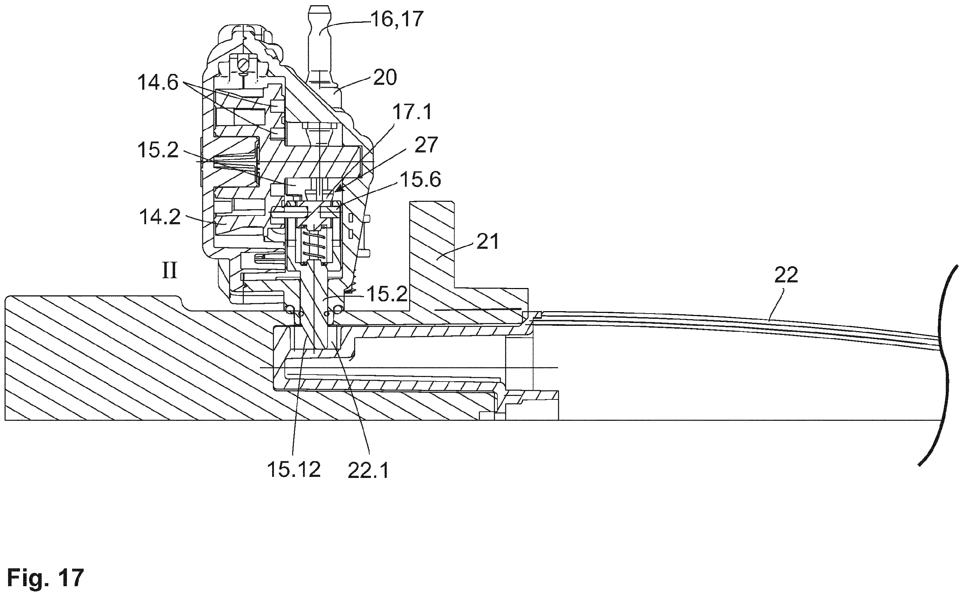

In der Figur 17 ist ein Schnitt C-C durch die Figur 16 dargestellt, wobei ein bewegliches Teil 22 in Form eines Ladekabelsteckers 22 in die Ladebuchse 21 eingeführt und verriegelt worden ist. Aus diesem Grund befindet sich das Sperrmittel 15 in der Verriegelungsstellung II. Hierbei bildet das Sperrmittel 15 mit seiner Spitze des Sperrteils 15.2 einen Formschluss mit einer Ausnehmung 22.1 vom Ladekabelstecker 22. In der Figur 17 ist beispielhaft an der Spitze des Sperrteils 15.2 eine Schräge 15.12 bzw. Farse 15.12 angedeutet. Durch diese Farse 15.12 ist es denkbar, den Ladekabelstecker 22 mit größerer Gewalt aus der Ladebuchse 21 herauszureißen ohne einen Schaden anzurichten. Selbstverständlich ist die zuvor erwähnte Schräge 15.12 bzw. Farse 15.12 nur optional denkbar. Grundsätzlich kann auf diese verzichtet werden, um somit nur ein Entfernen des beweglichen Teils 22 durch eine Zerstörung der Verbindung zwischen der Vorrichtung 10 und dem beweglichen Teil 22 zu ermöglichen.

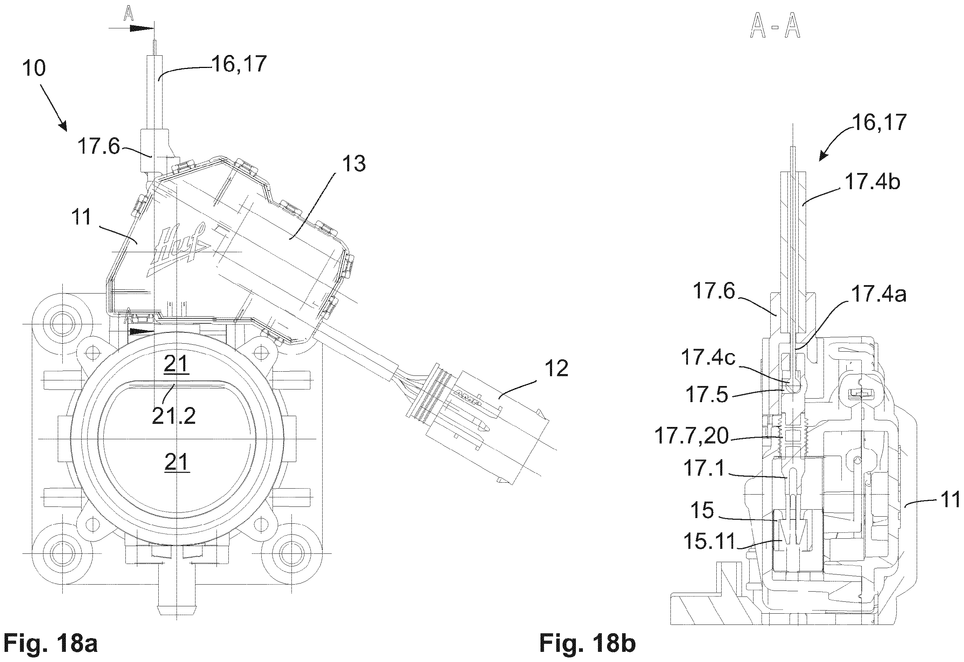

In den Figuren 18a bis 20b ist die Verriegelungsvorrichtung 10 vergleichbar zu den voran beschriebenen Figuren ausgeführt, wobei jedoch das erste Ende 17.1 vom Zugmittel 17 andersartig ausgestaltet ist. Alle übrigen Merkmale sind jedoch vergleichbar zu den bisher beschriebenen Figuren.

In der Figur 18a ist eine Seitenansicht der erfindungsgemäßen Verriegelungsvorrichtung 10 dargestellt, wobei das Zugmittel 17 über eine Zugmittelhalterung 17.6 am Gehäuse 11 befestigt ist. Die Zugmittelhalterung 17.6 kann über eine Längsführung mit einer entsprechenden Gegenführung im Gehäuse 11 verbunden werden. Hierfür braucht die Halterung 17.6 nur in die Gegenführung vom Gehäuse 11 durch Einschieben eingeführt und befestigt werden. Die Zugmittelhalterung 17.6 nimmt das erste Ende 17.1 sowie das flexible Zugmittel 17.4, insbesondere in Form eines Bowdenzugs auf. Die Figur 18a ist vergleichbar mit der Figur 16, wobei jedoch die Steckerbuchse 12 als flexible Steckerbuchse 12 ausgestaltet ist und nicht an dem Gehäuse 11 angespritzt ist, sondern über ein elektrisches Kabel mit dem Gehäuse 11 bzw. der Verriegelungsvorrichtung 10 verbunden ist.

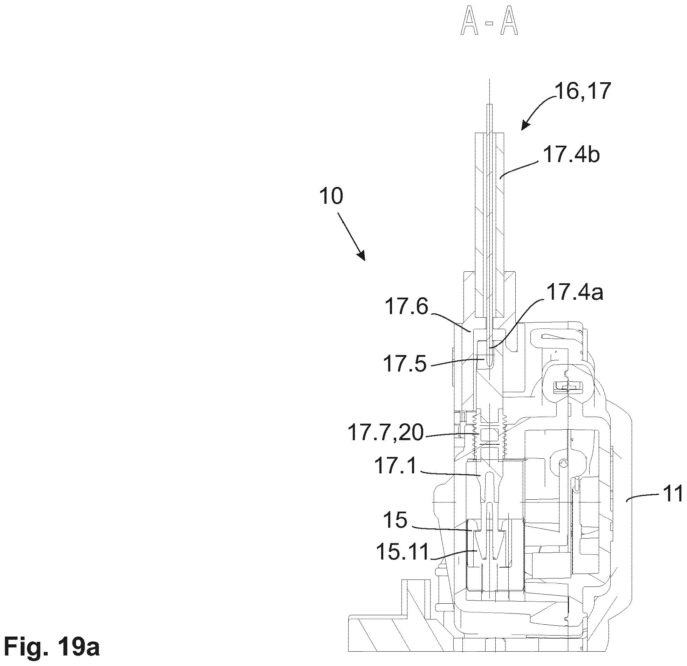

In der Figur 18b ist ein Schnitt A-A durch die Figur 18a dargestellt, wobei das besondere erste Ende 17.1 vom Zugmittel 17 gezeigt ist. Das erste Ende 17.1 ist formschlüssig über die auffedernde Spitze mit dem Sperrmittel 15 zumindest formschlüssig verbunden, wobei jedoch im Sperrmittel 15 ein Langloch/Freiraum 15.11 vorgesehen ist. Durch diesen Freiraum 15.11 wird sichergestellt, dass das Zugmittel 17, insbesondere das erste Ende 17.1, im Normalfall der Verriegelungsvorrichtung 10 nicht mit dem Sperrmittel 15 betätigt wird. Nur im Notfall kann das Sperrmittel 15 durch das Zugmittel 17 aus seiner Verriegelungsstellung II in seine Entriegelungsstellung I überführt werden. Wie weiter in der Figur 18b deutlich zu erkennen ist, ist an dem ersten Ende 17.1 vom Zugmittel 17 eine Dichtung 17.7, die vorzugsweise angespritzt ist, befestigt. Durch diese Dichtung 17.7 wird die Durchführung des Zugmittels 17 in das Gehäuse 11 der Verriegelungsvorrichtung 10 abgedichtet, so dass auf die zusätzliche Dichtung 20 aus den vorangegangenen Figuren 1 bis 17 verzichtet werden kann. Diese angespritzte Dichtung 17.7 ist auch in den weiteren Figuren 19a bis 20c am ersten Ende 17.1 vom Zugmittel 17 vorgesehen. Wie weiter zu erkennen ist, weist die Dichtung 17.7 zumindest einen Hohlraum auf.

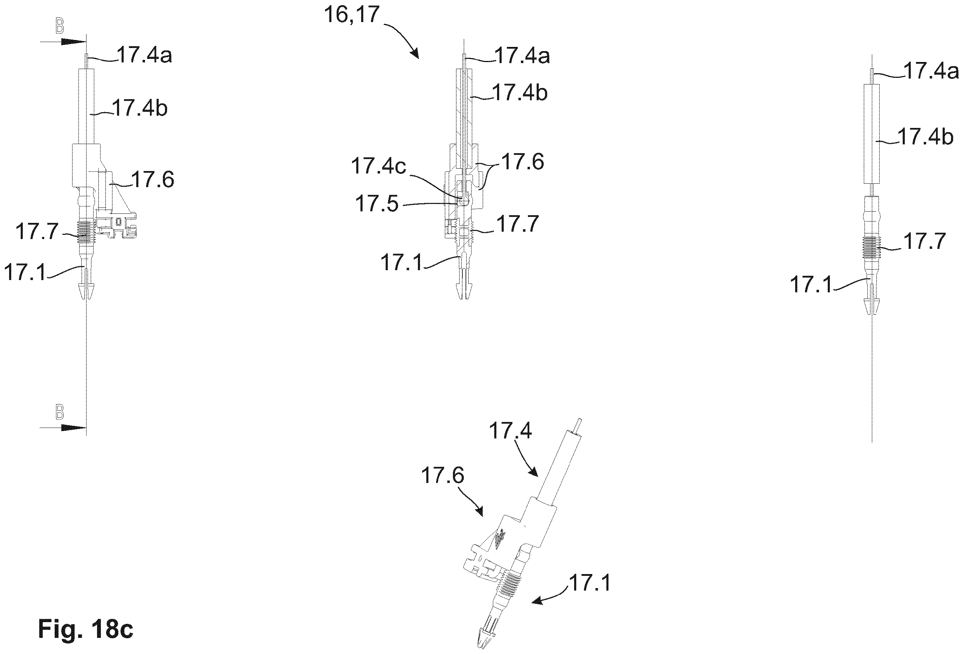

Die Verbindung zwischen dem flexiblen Teil 17.4 vom Zugmittel 17 und dem ersten Ende 17.1 vom Zugmittel 17 erfolgt vorzugsweise über eine Aufnahme 17.5 oder Öse 17.5, die bei einer Montage des ersten Endes 17.1 vom Zugmittel 17 aus dem Gehäuse 11 der Verriegelungsvorrichtung 10 herausragt. Durch diese Aufnahme 17.5 bzw. Öse 17.5 kann das flexible Zugmittel 17.4, welches in den Figuren 18a bis 20b als Bowdenzug ausgestaltet ist, befestigt werden. In den weiteren Figuren 18c ist nur das erste Ende 17.1 vom Zugmittel 17 sowie der Teil vom flexiblen Zugmittel 17.4 teilweise mit der Halterung 17.6 dargestellt. Wie aus den Figuren 18c zu erkennen ist, insbesondere aus dem Längsschnitt B-B (Figur 18c mittig oben) ist an einer Seele 17.4a vom Bowdenzug 17.4 eine Plombe 17.4c angeordnet, die formschlüssig mit der Aufnahme 17.5 vom ersten Ende 17.1 des Zugmittels 17 zusammenwirkt. Durch diese Aufnahme 17.5 ist die Seele 17.4a formschlüssig mit dem ersten Ende 17.1 vom Zugmittel 17 verbunden. Außerdem ist das flexible Zugmittel 17.4 durch die Aufnahme 17.5 austauschbar ausgestaltet. Wie bereits erwähnt ist es ebenfalls denkbar, dass das flexible Zugmittel 17.4 über eine Schraubverbindung mit dem ersten Teil 17.1 vom Zugmittel 17 verbunden ist. Oben in der Halterung 17.6 ist eine zylinderförmige Aufnahme für eine Hülle 17.4 vom Bowdenzug 17.4 vorgesehen. Somit dient die Halterung 17.6 auch zur Kraftübertragung der Zugkraft von der Seele 17.4a auf das erste Ende 17.1 vom Zugmittel 17. In der oberen rechten Figur 18c ist nur das vormontierte erste Ende 17.1 vom Zugmittel 17 mit dem Teil vom flexiblen Zugmittel 17.4 dargestellt, wie dieses z. B. an einen Fahrzeughersteller mit der erfindungsgemäßen Verriegelungsvorrichtung 10 ausgeliefert werden kann. Bei der Montage der Verriegelungsvorrichtung 10 am Fahrzeug muss nur noch das vormontierte Zugmittel 17 durch das Gehäuse 11 mit dem Sperrmittel 15 verbunden werden. Anschließend wird der Halter 17.6 von außen am Gehäuse 11 befestigt, um somit die Funktion des Zugmittels 17, insbesondere vom flexiblen Zugmittel 17.4 zu gewährleisten. Durch die angespritzte Dichtung 17.7 am ersten Ende 17.1 vom Zugmittel 17 erübrigt sich die Montage einer zusätzlichen Dichtung, die in den Figuren 1 bis 17 als Bezugszeichen 20 dargestellt ist.

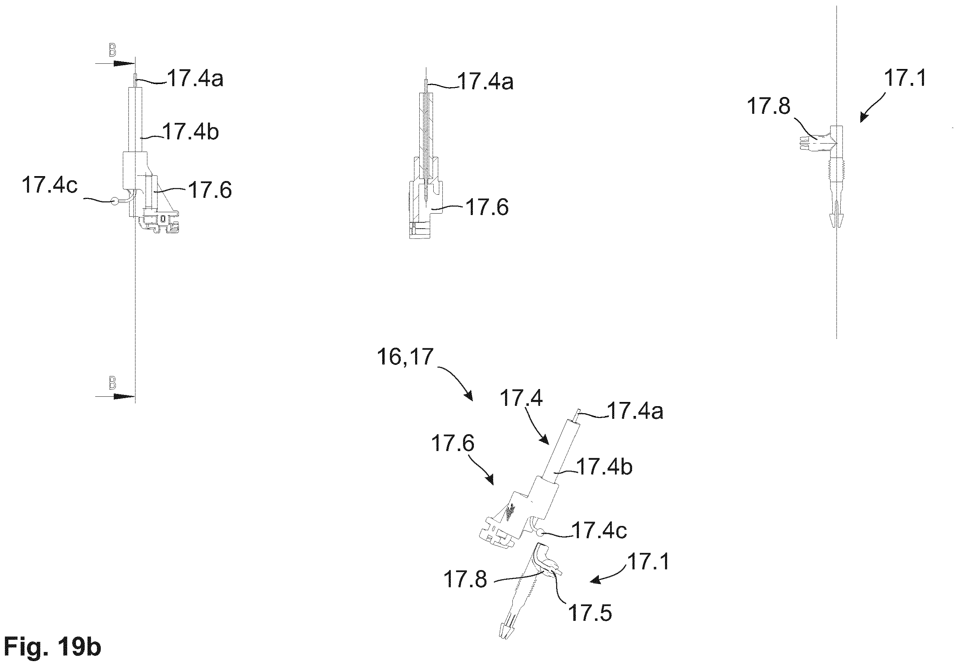

In den weiteren Figuren 19a und 19b ist das Zugmittel 17, insbesondere das erste Ende 17.1 mit einem seitlichen Ansatzstutzen 17.8 zur Aufname des flexiblen Zugmittels 17.4 ausgestaltet. Dieser Ansatzstutzen 17.8 dient zur Aufnahme des flexiblen Zugmittels 17.4 außerhalb des Gehäuses 11 im montierten Zustand der Verriegelungsvorrichtung 10. Wie gut anhand der Figur 19b oben links und unten mittig zu erkennen ist, wird das flexible Zugmittel 17.4 abgewinkelt durch den Stutzen 17.8 geführt. Darüber hinaus sind keine Änderungen am ersten Endes 17.1 vom Zugmittel 17 zum ersten Endes 17.1 vom Zugmittel 17 aus den Figuren 18a bis c vorhanden.

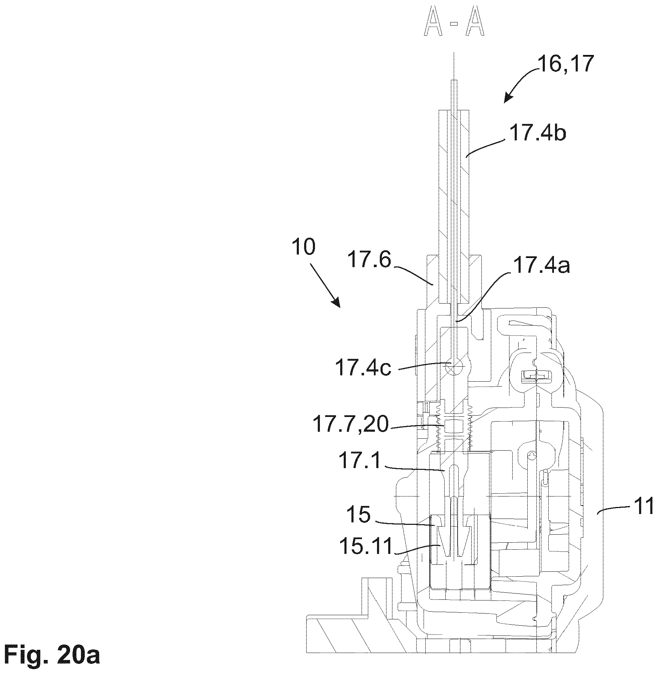

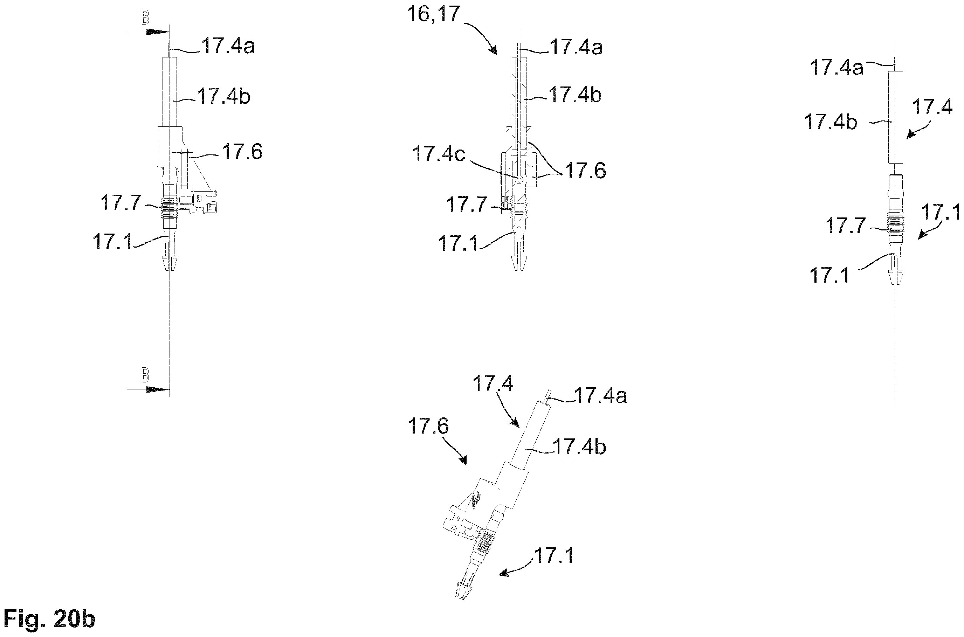

In den weiteren Figuren 20a und 20b ist das flexible Zugmittel 17.4 unlösbar mit dem ersten Ende 17.1 vom Zugmittel 17 verbunden, in dem das erste Ende 17.1 um die Plombe 17.4c vom flexiblen Zugmittel 17.4 umspritzt ist. Durch die unlösbare Befestigung des flexiblen Zugmittels 17.4 mit dem ersten Ende 17.1 vom Zugmittel 17 ist eine einfache und maschinelle Fertigung des gesamten Zugmittels 17 möglich. Hierbei kann auf das manuelle Einfädeln des flexiblen Zugmittels 17.4 in das ersten Ende 17.1 vom Zugmittel 17 verzichtet werden.

### Bezugszeichenliste

- 10: Verriegelungsvorrichtung
- 11: Gehäuse
- 11.1: untere Gehäusehälfte
- 11.2: obere Gehäusehälfte
- 11.3: Halte-, Führungs- und/oder Aufnahmeelement
- 11.4: Rastverbindung
- 11.5: Ring
- 12: Steckerbuchse
- 12.1: elektrische Kontakte
- 13: Antrieb
- 13.1: Antriebswelle
- 14: Getriebe
- 14.1: Schnecke
- 14.2: Schneckenrad
- 14.3: Steuermittel für 2. Sensor
- 14.4: Durchtrittsöffnung für 15
- 14.5: Führungsnut für 15
- 14.6: Führungsbahn in 14.2 für 15
- 15: Sperrmittel
- 15.1: Führungsteil
- 15.2: Sperrteil
- 15.3: Ausnehmung für 1. Ende
- 15.4: Durchbruch für 17
- 15.5: Steuermittel für 1. Sensor
- 15.6: Verbindungsteil, insbesondere Verbindungstift
- 15.7: Führungsvorsprung
- 15.8: Anschlag
- 15.9: Federelement
- 15.10: Langloch für 15.6
- 15.11: Langloch / Freiraum für 17.1
- 15.12: Schräge / Fase an Spitze von 15.2
- 16: Notentriegelung
- 17: Zugmittel für 16
- 17.1: erstes Ende
- 17.2: zweites Ende
- 17.3: Kompensationselement; insbesondere Feder
- 17.4: flexibles Zugmittel; Seil, Bowdenzug
- 17.4a: Seele von 17.4
- 17.4b: Hülle von 17.4
- 17.4c: Plombe
- 17.5: Aufnahme/Öse für 17.4
- 17.6: Halterung für 17.1/17.4
- 17.7: Dichtung (s. BZ 20)
- 17.8: Stutzen
- 18: erster Signalgeber, Sensor
- 19: zweiter Signalgeber, Sensor
- 19.1: Schaltblech
- 20: Dichtung für 17
- 21: Ladebuchse
- 21.1: elektrischer Kontakt
- 21.2: Verpolungsschutz
- 22: bewegliches Teil, insbesondere Ladekabelstecker
- 22.1: Ausnehmung für 15
- 23: Betätigungselement
- 24: Schließvorrichtung
- 24.1: Schließzylinder
- 24.2: Welle
- 25: Kommunikationsmittel für Daten
- 26: Schraube
- 26.1: Schraubenkopf
- 26.2: Gewinde
- 27: Rastverbindung zwischen 15 und 17

## Patentansprüche

1. Verriegelungsvorrichtung (10) zur Ver- und Entriegelung eines beweglichen Teils, insbesondere eines Ladekabelsteckers (22), für ein Fahrzeug mit zumindest einem beweglichen Sperrmittel (15), insbesondere in Form eines Sperrbolzens, das zur mechanischen Verriegelung des beweglichen Teils (22) dient, wobei das Sperrmittel (15) zumindest eine Verriegelungsstellung (II), in welcher das bewegliche Teil (22) durch das Sperrmittel (15) verriegelbar ist, und eine Entriegelungsstellung (I), in welcher das bewegliche Teil (22) durch das Sperrmittel (15) freigebbar ist, aufweist und
einem elektromechanischen Antrieb (13), der das Sperrmittel (15) antreibt, wodurch ein Wechsel zwischen der Verriegelungsstellung (II) und Entriegelungsstellung (I) erzeugbar ist, und
einem Gehäuse (11), in dem wenigstens das Sperrmittel (15) und der Antrieb (13) angeordnet ist,
**dadurch gekennzeichnet,**
**dass** eine Notentriegelung (16) für einen Notfall vorgesehen ist, wobei die Notentriegelung (16) das Sperrmittel (15) aus seiner Verriegelungsstellung (II) in seine Entriegelungsstellung (I) überführt.

2. Verriegelungsvorrichtung (10) nach Anspruch 1,
**dadurch gekennzeichnet,**
**dass** das Sperrmittel (15) zumindest zweiteilig aufgebaut ist, nämlich mit einem Führungsteil (15.1), wodurch das Sperrmittel (15) durch den Antrieb (13) bewegbar ist, und einem Sperrteil (15.2), wodurch die mechanische Verriegelung des Ladekabelsteckers (22) erzeugbar ist, und
**dass** insbesondere ein Federelement (15.9) zwischen dem Führungsteil (15.1) und dem Sperrteil (15.2) angeordnet ist, welches die beiden Teile (15.1,15.2) auseinanderdrückt.

3. Verriegelungsvorrichtung (10) nach Anspruch 1 oder 2,
**dadurch gekennzeichnet,**
**dass** an dem Sperrmittel (15) ein Steuermittel (15.5), insbesondere eine Steuerkurve oder Steuerkontur, vorgesehen ist, welches zur Ansteuerung eines ersten Signalgebers (18) dient, der innerhalb des Gehäuses (11) angeordnet ist,
wobei insbesondere das Steuermittel (15.5) an dem Sperrteil (15) angeordnet ist.

4. Verriegelungsvorrichtung (10) nach einem der vorhergehenden Ansprüche,
**dadurch gekennzeichnet,**
**dass** die Notentriegelung (16) ein Zugmittel (17) aufweist, wodurch zumindest ein Teil des Sperrmittels (15) im Notfall bewegbar ist,
wobei insbesondere das Zugmittel (17) mit dem Sperrteil (15.2) zusammenwirkt und gegen die Kraft des Federelementes (15.9) zum Führungsteil (15.1) bewegbar ist und/oder dass eine Montage des Zugmittels (17) bei einem zusammengesetzten Sperrmittel (15) ermöglicht ist.

5. Verriegelungsvorrichtung (10) nach einem der vorhergehenden Ansprüche,
**dadurch gekennzeichnet,**
**dass** das Zugmittel (17) ein Kompensationselement (17.3) aufweist, um eine Bewegung des Sperrmittels (15) zwischen der Ver- und Entriegelungsstellung (II,I) sowie ggf. äußere mechanische Einflüsse, insbesondere Wärmeausdehnungen, mechanische Erschütterungen und dergleichen kompensieren zu können,
wobei insbesondere das Kompensationselement (17.3) des Zugmittels (17) innerhalb des Gehäuses (11) und bevorzugt innerhalb des Sperrmittels (15) liegt.

6. Verriegelungsvorrichtung (10) nach einem der vorhergehenden Ansprüche,
**dadurch gekennzeichnet,**
**dass** das Zugmittel (17) mit einem ersten Ende (17.1) an dem Sperrteil (15) angreift, wobei insbesondere das Zugmittel (17) durch das Innere des Sperrteils (15) geführt ist und/oder dass das Zugmittel (17) mit einem zweiten Ende (17.2) in einem Fahrzeuginnenraum endet, wodurch es von einem Benutzer im Notfall bedienbar ist
und/oder dass das Zugmittel (17) mit seinem zweiten Ende (17.2) an einem Betätigungselement (23) ankoppelbar ist, wobei das Betätigungselement (23) durch eine mechanische Schließvorrichtung (24), insbesondere Schließzylinder (24.1), betätigbar ist und/oder dass das Zugmittel (17) ein Seil (17.4), einen Bowdenzug (17.4), eine Stange und/oder einen Hebel aufweist, wobei das erste Ende (17.1) des Zugmittels form-, kraft- und/oder stoffschlüssig mit dem Sperrteil (15.1) verbunden ist.

7. Verriegelungsvorrichtung (10) nach einem der vorhergehenden Ansprüche,
**dadurch gekennzeichnet,**
**dass** in dem Sperrteil (15.1) eine Ausnehmung (15.3) mit einem fortlaufenden Durchbruch (15.4) zur Aufnahme des Zugmittels (17) vorgesehen ist,
wobei insbesondere das erste Ende (17.1) des Zugmittels (17) in der Ausnehmung (15.3) gehalten ist und wobei insbesondere das Zugmittel (17) durch das Innere des Sperrmittels (15) und des Federelementes (15.9) verläuft.

8. Verriegelungsvorrichtung (10) nach einem der vorhergehenden Ansprüche,
**dadurch gekennzeichnet,**
**dass** die Verriegelungsvorrichtung (10), insbesondere durch ihr Gehäuse (11), mit einer Ladebuchse (21) für den Ladekabelstecker (22) für ein Fahrzeug mechanisch verbunden ist oder diese Ladebuchse (21) aufweist.

9. Verriegelungsvorrichtung (10) nach einem der vorhergehenden Ansprüche,
**dadurch gekennzeichnet,**
**dass** der Antrieb (13) über ein Getriebe (14) mit dem Sperrmittel (15) mechanisch verbunden ist und zusammenwirkt,
wobei insbesondere das Getriebe (14) als Schneckengetriebe ausgestaltet ist und insbesondere der Führungsteil (15.1) des Sperrmittels (15) in einem Schneckenrad (14.2) beweglich, insbesondere längsverschieblich, geführt ist.

10. Verriegelungsvorrichtung (10) nach einem der vorhergehenden Ansprüche,
**dadurch gekennzeichnet,**
**dass** ein zweiter Signalgeber (19) vorhanden ist, der eine Drehposition des Schneckenrades (14.2) bzw. eine Position des Führungsteils (15.1) vom Sperrmittel (15) messtechnisch erfasst.

11. Verriegelungsvorrichtung (10) nach einem der vorhergehenden Ansprüche,
**dadurch gekennzeichnet,**
**dass** die Verriegelungsvorrichtung (10) durch eine Fahrzeugelektronik, insbesondere ein elektronisches Sicherheitssystem, ansteuerbar ist,
wobei ein fahrzeugseitiger Verbindungsstecker über eine Steckerbuchse (12) mit der Verriegelungsvorrichtung (10) insbesondere elektrisch verbindbar ist, und
wobei insbesondere die Steckerbuchse (12) einteilig zum Gehäuse (11) ausgestaltet ist und/oder dass zumindest ein internes Kommunikationsmittel (25) vorhanden ist, womit ein insbesondere drahtloser Datenaustausch mit einem externen Kommunikationsmittel ermöglichbar ist, wodurch ebenfalls die Ansteuerung der Verriegelungsvorrichtung (10) beeinflussbar ist.

12. Verriegelungsvorrichtung (10) nach einem der vorhergehenden Ansprüche,
**dadurch gekennzeichnet,**
**dass** das Gehäuse (11) zumindest zweiteilig ausgestaltet ist und eine untere und obere Gehäusehälfte (11.1,11.2) aufweist, und
wobei die Gehäusehälften (11.1,11.2) über Rastverbindungen (11.4) miteinander verbunden sind, und
wobei insbesondere innerhalb der Gehäusehälften (11.1,11.2) Halte-, Führungs- und/oder Aufnahmeelemente (11.3) für die weiteren Bauteile (13-20) der Verriegelungsvorrichtung (10) angeordnet sind.

13. Verriegelungsvorrichtung (10) nach einem der vorhergehenden Ansprüche,
**dadurch gekennzeichnet,**
**dass** ein Freiraum (17.1) am Sperrmittel (15) für das Zugmittel (17), insbesondere das erste Ende (17.1), vorgesehen ist, wodurch im Normalfall eine Bewegung des Sperrmittels (15) zwischen der Ver- und Entriegelungsstellung (II,I) ohne eine Bewegung des Zugmittels (17) durchführbar ist.

14. Verriegelungsvorrichtung (10) nach einem der vorhergehenden Ansprüche,
**dadurch gekennzeichnet,**
**dass** Getriebe (14) ein Schneckenrad (14.2) mit einer seitlichen Führungsbahn (14.6) aufweist, womit das Sperrmittel (15) zwischen der Ver- und Entriegelungsstellung (II,I), insbesondere längsverschieblich, bewegbar ist
und/oder dass eine Drehachse des Schneckenrads (14.2) orthogonal zur Bewegungsrichtung des Sperrmittels (15) zwischen der Ver- und Entriegelungsstellung (II, I) angeordnet ist.

15. Verfahren zur Betätigung einer Verriegelungsvorrichtung (10) nach einem der vorhergehenden Ansprüche zur Ver-und Entriegelung eines beweglichen Teils (22), insbesondere eines Ladekabelsteckers (22) für ein Fahrzeug durch ein Sperrmittel (15),
**dadurch gekennzeichnet,**
**dass** eine Notentriegelung (16) für einen Notfall vorgesehen ist, die im Notfall ausschließlich durch einen berechtigten Benutzer betätigt wird, um das Sperrmittel (15) aus seiner Verriegelungsstellung (II) in seine Entriegelungsstellung (I) zu überführen.

## Claims

1. Locking device (10) for locking and unlocking a movable part, in particular a charging cable plug (22), for a vehicle with
at least one movable blocking means (15), in particular in the form of a blocking bolt, which serves for mechanically locking the movable part (22), wherein the blocking means (15) comprises at least one locking position (II), in which the movable part (22) can be locked by the blocking means (15), and one unlocking position (I), in which the movable part (22) can be released by the blocking means (15), and
an electromechanical drive (13) which drives the blocking means (15), whereby a change between the locking position (II) and unlocking position (I) can be generated, and
a housing (11) in which at least the blocking means (15) and the drive (13) are arranged,
**characterized In that**
an emergency release (16) is provided for an emergency, wherein the emergency release (16) transfers the blocking means (15) from its locking position (II) to its unlocking position (I).

2. Locking device (10) according to claim 1,
**characterized in that**
the blocking means (15) is constructed in at least two parts, namely with a guiding part (15.1), whereby the blocking means (15) can be moved by the drive (13), and a blocking part (15.2), whereby the mechanical locking of the charging cable plug (22) can be generated, and
in particular wherein a spring element (15.9) is arranged between the guiding part (15.1) and the blocking part (15.2), which presses the two parts (15.1, 15.2) apart.

3. Locking device (10) according to claim 1 or 2,
**characterized in that**
a control means (15.5), in particular a control curve or a control contour, is provided on the blocking means (15), which is used to control a first signal transmitter (18) which is arranged inside the housing (11),
wherein in particular the control means (15.5) is arranged on the blocking part (15).

4. Locking device (10) according to one of the previous claims,
**characterized in that**
the emergency release (16) comprises a traction means (17), whereby at feast part of the blocking means (15) can be moved in an emergency,
wherein in particular the traction means (17) interacts with the blocking part (15.2) and is movable towards the guiding part (15.1) against the force of the spring element (15.9) and/or an assembly of the traction means (17) with a composite blocking means (15) is enabled.

5. Locking device (10) according to one of the previous claims,
**characterized in that**
the traction means (17) comprises a compensation element (17.3) in order to be able to compensate for a movement of the blocking means (15) between the locking and unlocking positions (II, I) and possibly external mechanical influences, in particular thermal expansions, mechanical vibrations and the like,
wherein in particular the compensation element (17.3) of the traction means (17) lies within the housing (11) and preferably within the blocking means (15).

6. Locking device (10) according to one of the previous claims,
**characterized in that**
the traction means (17) engages with a first end (17.1) on the blocking part (15), wherein in particular the traction means (17) is guided through the interior of the blocking part (15)
and/or the traction means (17) terminates with a second end (17.2) in a vehicle interior, whereby it can be operated by a user in an emergency
and/or the traction means (17) can be coupled with its second end (17.2) to an actuating element (23), wherein the actuating element (23) can be actuated by a mechanical closing device (24), in particular a locking cylinder (24.1)
and/or the traction means (17) comprises a cable (17.4), a Bowden cable (17.4), a rod and/or a lever, wherein the first end (17.1) of the traction means is connected to the blocking part (15.1) in a form-locking, force-locking and/or material-locking manner.

7. Locking device (10) according to one of the previous claims,
**characterized in that**
a recess (15.3) with a continuous opening (15.4) is provided in the blocking part (15.1) for receiving the traction means (17),
wherein in particular the first end (17.1) of the traction means (17) is held in the recess (15.3) and wherein in particular the traction means (17) extends through the interior of the blocking means (15) and the spring element (15.9).

8. Locking device (10) according to one of the previous claims,
**characterized in that**
the locking device (10) is mechanically connected, in particular by its housing (11), to a charging socket (21) for the charging cable plug (22) for a vehicle or comprises this charging socket (21).

9. Locking device (10) according to one of the previous claims,
**characterized in that**
the drive (13) is mechanically connected and interacts with the blocking means (15) via a gear (14),
wherein in particular the gear (14) is designed as a worm gear and
in particular the guiding part (15.1) of the blocking means (15) is guided movably, in particular longitudinally displaceably, in a worm wheel (14.2).

10. Locking device (10) according to one of the previous claims,
**characterized in that**
a second signal transmitter (19) is present which detects a rotational position of the worm wheel (14.2) or a position of the guiding part (15.1) by the blocking means (15) by means of measurement.

11. Locking device (10) according to one of the previous claims,
**characterized in that**
the locking device (10) can be controlled by a vehicle electronic system, in particular an electronic safety system,
wherein a vehicle-side connecting plug can be connected, in particular electrically, to the locking device (10) via a socket (12), and
wherein in particular the socket (12) is designed in one piece to the housing (11) and/or at least one internal communication means (25) is present, whereby an in particular wireless data exchange with an external communication means is possible, whereby the control of the locking device (10) can also be influenced.

12. Locking device (10) according to one of the previous claims,
**characterized in that**
the housing (11) is designed in at least two parts and comprises a lower and upper housing half (11.1, 11.2), and
wherein the housing halves (11.1, 11.2) are connected to each other via engaging connections (11.4), and
wherein in particular holding, guiding and/or receiving elements (11.3) for the further components (13-20) of the locking device (10) are arranged within the housing halves (11.1, 11.2).

13. Locking device (10) according to one of the previous claims,
**characterized in that**
a free space (17.1) is provided on the blocking means (15) for the traction means (17), in particular the first end (17.1), whereby under normal conditions a movement of the blocking means (15) between the locking and unlocking positions (II, I) can be carried out without a movement of the traction means (17).

14. Locking device (10) according to one of the previous claims,
**characterized in that**
the gear (14) comprises a worm wheel (14.2) with a lateral guiding track (14.6), with which the blocking means (15) can be moved, in particular longitudinally displaceably, between the locking and unlocking positions (II, I)
and/or a rotation axis of the worm wheel (14.2) is arranged orthogonal to the direction of movement of the blocking means (15) between the locking and unlocking positions (II, I).

15. Method for actuating a locking device (10) according to one of the previous claims for locking and unlocking a movable part (22), in particular a charging cable plug (22) for a vehicle by a blocking means (15),
**characterized in that**
an emergency release (16) is provided for an emergency, which is actuated in an emergency exclusively by an authorized user in order to transfer the blocking means (15) from its locking position (II) to its unlocking position (I).

## Revendications

1. Dispositif de verrouillage (10) pour verrouiller et déverrouiller une partie mobile, en particulier un connecteur de câble de chargement (22), pour un véhicule avec au moins un moyen de blocage mobile (15), en particulier sous la forme d'un boulon de blocage, qui sert à verrouiller mécaniquement la partie mobile (22), le moyen de blocage (15) présentant au moins une position de verrouillage (II), dans laquelle la partie mobile (22) peut être verrouillée par le moyen de blocage (15), et une position de déverrouillage (I), dans laquelle la partie mobile (22) peut être libérée par le moyen de blocage (15), et un entraînement électromécanique (13) qui entraîne le moyen de blocage (15), ce qui permet de passer de la position de verrouillage (II) à la position de déverrouillage (I), et un boîtier (11) dans lequel sont disposés au moins le moyen de blocage (15) et l'entraînement (13),
**caractérisé en ce qu'**
un déverrouillage d'urgence (16) est prévu en cas d'urgence, le déverrouillage d'urgence (16) transférant le moyen de blocage (15) de sa position de verrouillage (II) à sa position de déverrouillage (I).

2. Dispositif de verrouillage (10) selon la revendication 1,
**caractérisé en ce que**
le moyen de blocage (15) est réalisé en au moins deux parties, à savoir avec une partie de guidage (15.1), le moyen de blocage (15) pouvant être déplacé par l'entraînement (13), et une partie de blocage (15.2), le verrouillage mécanique du connecteur du câble de chargement (22) pouvant être réalisé, et
en particulier, un élément de ressort (15.9) est disposé entre la partie de guidage (15.1) et la partie de blocage (15.2), qui écarte les deux parties (15.1, 15.2).

3. Dispositif de verrouillage (10) selon la revendication 1 ou 2,
**caractérisé en ce qu'**
un moyen de commande (15.5), en particulier une came de commande ou un contour de commande, est prévu sur le moyen de blocage (15), qui sert à commander un premier émetteur de signaux (18) qui est disposé à l'intérieur du boîtier (11),
dans lequel en particulier le moyen de commande (15.5) est disposé sur la partie de blocage (15).

4. Dispositif de verrouillage (10) selon l'une des revendications précédentes,
**caractérisé en ce que**
le déverrouillage d'urgence (16) comprend un moyen de traction (17), grâce auquel au moins une partie du moyen de blocage (15) peut être déplacée en cas d'urgence, dans lequel en particulier le moyen de traction (17) coopère avec la partie de blocage (15.2) et est mobile vers la partie de guidage (15.1) contre la force de l'élément de ressort (15.9) et/ou il est possible de monter le moyen de traction (17) avec un moyen de blocage composite (15).

5. Dispositif de verrouillage (10) selon l'une des revendications précédentes,
**caractérisé en ce que**
le moyen de traction (17) comprend un élément de compensation (17.3) afin de pouvoir compenser un mouvement du moyen de blocage (15) entre les positions de verrouillage et de déverrouillage (II, I) et éventuellement des influences mécaniques extérieures, en particulier des dilatations thermiques, des vibrations mécaniques et autres,
dans lequel en particulier l'élément de compensation (17.3) du moyen de traction (17) se trouve dans le boîtier (11) et de préférence dans le moyen de blocage (15).

6. Dispositif de verrouillage (10) selon l'une des revendications précédentes,
**caractérisé en ce qu'**
une première extrémité (17.1) du moyen de traction (17) s'engage sur la partie de blocage (15),
où en particulier le moyen de traction (17) est guidé à l'intérieur de la partie de blocage (15) et/ou le moyen de traction (17) se termine par une seconde extrémité (17.2) à l'intérieur du véhicule, de sorte qu'il puisse être actionné par un utilisateur en cas d'urgence
et/ou le moyen de traction (17) peut être couplé par sa seconde extrémité (17.2) à un élément d'actionnement (23), l'élément d'actionnement (23) pouvant être actionné par un dispositif de fermeture mécanique (24), en particulier un cylindre de fermeture (24.1) et/ou le moyen de traction (17) comprend un câble (17.4), un câble Bowden (17.4), une tige et/ou un levier, la première extrémité (17.1) du moyen de traction étant reliée à la partie de blocage (15.1) par une liaison par la forme, par la force et/ou par la matière.

7. Dispositif de verrouillage (10) selon l'une des revendications précédentes,
**caractérisé en ce qu'**
un évidement (15.3) avec une ouverture continue (15.4) pour recevoir le moyen de traction (17) est prévu dans la partie de blocage (15.1),
dans lequel en particulier la première extrémité (17.1) du moyen de traction (17) est maintenue dans l'évidement (15.3) et dans lequel en particulier le moyen de traction (17) s'étend à travers l'intérieur du moyen de blocage (15) et de l'élément de ressort (15.9).

8. Dispositif de verrouillage (10) selon l'une des revendications précédentes,
**caractérisé en ce que**
le dispositif de verrouillage (10) est relié mécaniquement, en particulier par son boîtier (11), à une prise de charge (21) pour le connecteur du câble de chargement (22) d'un véhicule ou possède cette prise de charge (21).

9. Dispositif de verrouillage (10) selon l'une des revendications précédentes,
**caractérisé en ce que**
l'entraînement (13) est relié mécaniquement et interagit avec le moyen de blocage (15) par l'intermédiaire d'un engrenage (14),
dans lequel, en particulier, l'engrenage (14) est conçu comme un engrenage à vis sans fin et
en particulier la partie de guidage (15.1) du moyen de blocage (15) est guidée de manière mobile, en particulier longitudinalement, dans une roue à vis sans fin (14.2).

10. Dispositif de verrouillage (10) selon l'une des revendications précédentes,
**caractérisé en ce qu'**
un second émetteur de signaux (19) est présent, qui détecte une position de rotation de la roue à vis sans fin (14.2) ou une position de la partie de guidage (15.1) par le moyen de blocage (15) en utilisant une technique de mesure.

11. Dispositif de verrouillage (10) selon l'une des revendications précédentes,
**caractérisé en ce que**
le dispositif de verrouillage (10) peut être commandé par un système électronique du véhicule, en particulier un système électronique de sécurité,
dans lequel un connecteur de raccordement côté véhicule peut être reliée, en particulier électriquement, au dispositif de verrouillage (10) par l'intermédiaire d'une prise de connecteur (12), et
la prise de connecteur (12), en particulier, est conçue d'une seule partie avec le boîtier (11) et/ou il existe au moins un moyen de communication interne (25), avec lequel un échange de données en particulier sans fil avec un moyen de communication externe peut être réalisé, ce qui permet également d'influencer l'activation du dispositif de verrouillage (10).

12. Dispositif de verrouillage (10) selon l'une des revendications précédentes,
**caractérisé en ce que**
le boîtier (11) est conçu en au moins deux parties et comprend une moitié inférieure et une moitié supérieure (11.1, 11.2), et
dans lequel les moitiés du boîtier (11.1, 11.2) sont reliées entre elles par des connexions à encliquetage (11.4), et
dans lequel des éléments de maintien, de guidage et/ou de réception (11.3) pour les autres composants (13-20) du dispositif de verrouillage (10) sont en particulier disposés à l'intérieur des moitiés de boîtier (11.1, 11.2).

13. Dispositif de verrouillage (10) selon l'une des revendications précédentes,
**caractérisé en ce qu'**
un espace libre (17.1) est prévu sur le moyen de blocage (15) pour le moyen de traction (17), en particulier la première extrémité (17.1), grâce auquel il est normalement possible d'effectuer un mouvement du moyen de blocage (15) entre les positions de verrouillage et de déverrouillage (II, I) sans un mouvement du moyen de traction (17).

14. Dispositif de verrouillage (10) selon l'une des revendications précédentes,
**caractérisé en ce que**
l'engrenage (14) comprend une roue à vis sans fin (14.2) avec une voie de guidage latérale (14.6), avec laquelle le moyen de blocage (15) peut être déplacé, en particulier longitudinalement, entre la position de verrouillage et la position de déverrouillage (II, I) et/ou un axe de rotation de la roue à vis sans fin (14.2) est disposé orthogonalement à la direction de mouvement du moyen de blocage (15) entre les positions de verrouillage et de déverrouillage (II, I).

15. Procédé pour actionner un dispositif de verrouillage (10) selon l'une des revendications précédentes pour verrouiller et déverrouiller une partie mobile (22), en particulier un connecteur de câble de chargement (22) pour un véhicule par un moyen de blocage (15),
**caractérisé en ce qu'**
un déverrouillage d'urgence (16) est prévu en cas d'urgence, qui est actionné exclusivement par un utilisateur autorisé afin de faire passer le moyen de blocage (15) de sa position de verrouillage (II) à sa position de déverrouillage (I).
